# EUROPEAN PATENT APPLICATION

(11) **EP 4 738 036 A1**
(43) Date of publication of application: **06.05.2026**
(21) Application number: 25211374.1
(22) Date of filing: 27.10.2025
(51) Int. Cl.: G05B 19/418, B23Q 3/155

(54) **CONTROL DEVICE, MACHINE TOOL, CONTROL METHOD, AND COMPUTER PROGRAM**

(30) Priority: 05.11.2024 JP 2024194020
(71) Applicant: Brother Kogyo Kabushiki Kaisha, Nagoya-shi, Aichi 467-8561 (JP)
(72) Inventor: TAKIMOTO, Hiroki, Nagoya, 467-8562 (JP); KANADA, Motoki, Nagoya, 467-8562 (JP)
(74) Representative: Prüfer & Partner mbB Patentanwälte · Rechtsanwälte

(57) **Abstract**

A control device configured to control: a first magazine; a second magazine; and a tool conveying device. In a state in which a second accommodation portion that is empty is disposed at a second replacement position, in a case where a first moving instruction for causing a tool to move from the first magazine to the second magazine is executed and in a case where a second moving instruction for causing a tool to move from the second magazine to the first magazine is executed, the control device executes: a first process of indexing a specified first accommodation portion to the first replacement position, a second process of performing a tool conveying operation, a third process of indexing the second accommodation portion located at a position other than the second replacement position to the second replacement position, and a fourth process of performing a tool conveying operation.

## Description

### TECHNICAL FIELD

The present technique relates to a control device, a machine tool, a control method, and a computer program.

### BACKGROUND

A machine tool capable of replacing tools among a plurality of tool magazines has been proposed. The machine tool includes a plurality of tool magazines, and a switch that is provided in a tool holding portion of each of the plurality of tool magazines and detects presence or absence of a tool. The machine tool confirms a state of the presence or absence of the tool in each tool holding portion based on a detection result of the switch. In a case where the state of the presence or absence of the tool in the tool holding portion is abnormal at the time of tool replacement, a warning, or abnormal stop is issued (see Patent Literature 1).

### Citation List

### Patent Literature

Patent Literature 1: JP5503908B

### SUMMARY

### Technical Problem

In the case where the state of the presence or absence of the tool in the tool holding portion is abnormal, when the tool replacement is performed, tools may collide with each other. However, when the switch is provided in each of the plurality of tool holding portions to detect the state of the presence or absence of the tool, a manufacturing cost is increased.

The present disclosure has been made in view of such circumstances, and an object of the present disclosure is to provide a control device, a machine tool, a control method, and a computer program capable of preventing collision between tools in a case where a tool is conveyed between a plurality of tool magazines without providing a detection unit that detects presence or absence of a tool in an accommodation portion that accommodates the tool of each tool magazine.

### Solution to Problem

A control device according to one embodiment of the present disclosure is a control device configured to control: a first magazine including a plurality of first accommodation portions in which a first tool being accommodated; a second magazine including a plurality of second accommodation portions in which a second tool being accommodated; and a tool conveying device configured to convey at least one of the first tool and the second tool between a first replacement position for removing or accommodating the first tool in the first magazine and a second replacement position for removing or accommodating the second tool in the second magazine, in which in a state in which the second accommodation portion that is empty is disposed at the second replacement position, in a case where a first moving instruction for causing the first tool to move from the first magazine to the second magazine is executed and in a case where a second moving instruction for causing the second tool to move from the second magazine to the first magazine is executed, the control device is configured to: execute a first process of indexing a specified first accommodation portion to the first replacement position in the first magazine; execute a second process of performing a first tool conveying operation from the first replacement position to the second replacement position in the tool conveying device after the first process is executed; execute a third process of indexing the second accommodation portion located at a position other than the second replacement position to the second replacement position in the second magazine after the second process is executed; and execute a fourth process of performing a second tool conveying operation from the second replacement position to the first replacement position in the tool conveying device after the third process is executed.

In the present disclosure, by executing the first process to the fourth process in a state in which the second accommodation portion that is empty is disposed at the second replacement position, the tool conveying device conveys the tool to the second accommodation portion that is empty in a case where the tool is caused to move from the first magazine to the second magazine, and conveys the tool to the first accommodation portion that is empty in a case where the tool is caused to move from the second magazine to the first magazine.

In the control device according to one embodiment of the present disclosure, the tool conveying device includes: a gripping portion configured to grip at least one of the first tool and the second tool, and a moving mechanism configured to move the gripping portion to: a first gripping position corresponding to the first replacement position and where the gripping portion can grip at least one of the first tool and the second tool; a second gripping position corresponding to the second replacement position and where the gripping portion can grip at least one of the first tool and the second tool; and a non-interference position that is a position different from the first replacement position and the second replacement position and where the gripping portion does not interfere with the first magazine and the second magazine, in the second process, a moving operation of the gripping portion to the first gripping position, a gripping operation of the at least one of the first tool and the second tool by the gripping portion at the first gripping position, a moving operation of the gripping portion to the second gripping position, a non-gripping operation of the at least one of the first tool and the second tool by the gripping portion at the second gripping position, and a moving operation of the gripping portion from the second gripping position to the non-interference position are executed, and in the fourth process, a moving operation of the gripping portion to the second gripping position, a gripping operation of the at least one of the first tool and the second tool by the gripping portion at the second gripping position, a moving operation of the gripping portion to the first gripping position, a non-gripping operation of the at least one of the first tool and the second tool by the gripping portion at the first gripping position, and a moving operation of the gripping portion from the first gripping position to the non-interference position are executed.

In the present disclosure, in the second process, the gripping portion executes the gripping operation at the first gripping position, moves to the second replacement position, and executes the non-gripping operation. In the fourth process, the gripping portion executes the gripping operation at the second gripping position, moves to the first replacement position, executes the non-gripping operation, and moves to the non-interference position

In the control device according to one embodiment of the present disclosure, before the first moving instruction or the second moving instruction is executed, the control device is configured to: determine whether to make the first accommodation portion indexed in the first process empty after the first moving instruction or the second moving instruction is executed, determine whether at least one of the first tool and the second tool are accommodated in all the second accommodation portions located at positions other than the second replacement position in a case where it is determined to make the first accommodation portion indexed in the first process empty after the first moving instruction or the second moving instruction is executed, and execute an abnormality process in a case where it is determined that the at least one of the first tool and the second tool are accommodated in all the second accommodation portions located at the positions other than the second replacement position.

In a case where the tools are accommodated in all the second accommodation portions located at the positions other than the second replacement position, the first accommodation portion indexed in the first process cannot be made empty after the first moving instruction or the second moving instruction is executed. In the present disclosure, in a case where the first accommodation portion indexed in the first process is made empty after the first moving instruction or the second moving instruction is executed, when it is determined that the tools are accommodated in all the second accommodation portions at the positions other than the second replacement position, the abnormality process is executed.

In the control device according to one embodiment of the present disclosure, before the first moving instruction or the second moving instruction is executed, the control device is configured to: determine whether to make the first accommodation portion indexed in the first process empty after the first moving instruction or the second moving instruction is executed, determine whether the first tool and/or the second tool are accommodated in all the second accommodation portions located at positions other than the second replacement position in a case where it is determined to make the first accommodation portion indexed in the first process empty after the first moving instruction or the second moving instruction is executed, and execute, in a case where it is determined that the first tool and/or the second tool are accommodated in all the second accommodation portions located at the positions other than the second replacement position, a process of conveying at least one of the first tool and the second tool from any of the second accommodation portions in which at least one of the first tool and the second tool is accommodated to the first accommodation portion that is indexed in the first process and becomes empty in the second process in the execution of the fourth process when the first moving instruction or the second moving instruction is executed.

In a case where the tools are accommodated in all the second accommodation portions located at the positions other than the second replacement position, the first accommodation portion indexed in the first process cannot be made empty after the first moving instruction or the second moving instruction is executed. In the present disclosure, in a case where the first accommodation portion indexed in the first process is made empty after the first moving instruction or the second moving instruction is executed, when it is determined that the tools are accommodated in all the second accommodation portions at the positions other than the second replacement position, in the execution of the fourth process, a process of conveying the tool from any second accommodation portion in which the tool is accommodated to the first accommodation portion that is indexed in the first process and made empty in the second process is executed. The first accommodation portion indexed in the first process does not become empty, and the tool conveying process is continued.

In the control device according to one embodiment of the present disclosure, before the first process is executed, the control device is configured to execute a process of: specifying the first accommodation portion to be disposed to the first replacement position; storing first information indicating the specified first accommodation portion; specifying the second accommodation portion to be disposed to the second replacement position; and storing second information indicating the specified second accommodation portion, in the first process, the first accommodation portion based on the first information is indexed to the first replacement position, and in the third process, the second accommodation portion based on the second information is indexed to the second replacement position.

In the present disclosure, the specified first accommodation portion is indexed to the first replacement position in the first process, and the specified second accommodation portion is indexed to the second replacement position in the third process.

A machine tool according to one embodiment of the present disclosure is a machine tool including: a first magazine including a plurality of first accommodation portions in which a first tool being accommodated; a second magazine including a plurality of second accommodation portions in which a second tool being accommodated; a tool conveying device configured to convey at least one of the first tool and the second tool between a first replacement position for removing or accommodating the first tool in the first magazine and a second replacement position for removing or accommodating the second tool in the second magazine; and a control device configured to control the first magazine, the second magazine, and the tool conveying device, in which the control device is configured to, in a state in which the second accommodation portion that is empty is disposed at the second replacement position, in a case where a first moving instruction for causing the first tool to move from the first magazine to the second magazine is executed and in a case where a second moving instruction for causing the second tool to move from the second magazine to the first magazine is executed, execute a first process of indexing a specified first accommodation portion to the first replacement position in the first magazine, execute a second process of performing a first tool conveying operation from the first replacement position to the second replacement position in the tool conveying device after the first process is executed, execute a third process of indexing the second accommodation portion located at a position other than the second replacement position to the second replacement position in the second magazine after the second process is executed, and execute a fourth process of performing a second tool conveying operation from the second replacement position to the first replacement position in the tool conveying device after the third process is executed.

In the present disclosure, by executing the first process to the fourth process in a state in which the second accommodation portion that is empty is disposed at the second replacement position, the tool conveying device conveys the tool to the second accommodation portion that is empty in a case where the tool is caused to move from the first magazine to the second magazine, and conveys the tool to the first accommodation portion that is empty in a case where the tool is caused to move from the second magazine to the first magazine.

The machine tool according to one embodiment of the present disclosure further includes a restriction cover configured to restrict attachment and removal of the second tool to and from the second magazine without using the tool conveying device.

In the present disclosure, an operator cannot attach and remove the tool to and from the second magazine. The tool conveying between the first magazine and the second magazine is possible only by the tool conveying device.

A control method according to one embodiment of the present disclosure is a control method for controlling a first magazine including a plurality of first accommodation portions in which a first tool being accommodated, a second magazine including a plurality of second accommodation portions in which a second tool being accommodated, and a tool conveying device configured to convey at least one of the first tool and the second tool between a first replacement position for removing or accommodating the first tool in the first magazine and a second replacement position for removing or accommodating the second tool in the second magazine, the control method including: in a state in which the second accommodation portion that is empty is disposed at the second replacement position, in a case where a first moving instruction for causing the first tool to move from the first magazine to the second magazine is executed and in a case where a second moving instruction for causing the second tool to move from the second magazine to the first magazine is executed, executing a first process of indexing a specified first accommodation portion to the first replacement position in the first magazine; executing a second process of performing a first tool conveying operation from the first replacement position to the second replacement position in the tool conveying device after the first process is executed; executing a third process of indexing the second accommodation portion located at a position other than the second replacement position to the second replacement position in the second magazine after the second process is executed; and executing a fourth process of performing a second tool conveying operation from the second replacement position to the first replacement position in the tool conveying device after the third process is executed.

In the present disclosure, by executing the first process to the fourth process in a state in which the second accommodation portion that is empty is disposed at the second replacement position, the tool conveying device conveys the tool to the second accommodation portion that is empty in a case where the tool is caused to move from the first magazine to the second magazine, and conveys the tool to the first accommodation portion that is empty in a case where the tool is caused to move from the second magazine to the first magazine.

A computer program according to one embodiment of the present disclosure is a computer program executable by a control device, the control device being configured to control: a first magazine including a plurality of first accommodation portions in which a first tool is accommodated; a second magazine including a plurality of second accommodation portions in which a second tool being accommodated; and a tool conveying device configured to convey at least one of the first tool and the second tool between a first replacement position for removing or accommodating the first tool in the first magazine and a second replacement position for removing or accommodating the second tool in the second magazine, in which the control device is caused to, in a state in which the second accommodation portion that is empty is disposed at the second replacement position, in a case where a first moving instruction for causing the first tool to move from the first magazine to the second magazine is executed and in a case where a second moving instruction for causing the second tool to move from the second magazine to the first magazine is executed, execute a first process of indexing a specified first accommodation portion to the first replacement position in the first magazine, execute a second process of performing a first tool conveying operation from the first replacement position to the second replacement position in the tool conveying device after the first process is executed, execute a third process of indexing the second accommodation portion located at a position other than the second replacement position to the second replacement position in the second magazine after the second process is executed, and execute a fourth process of performing a second tool conveying operation from the second replacement position to the first replacement position in the tool conveying device after the third process is executed.

In the present disclosure, by executing the first process to the fourth process in a state in which the second accommodation portion that is empty is disposed at the second replacement position, the tool conveying device conveys the tool to the second accommodation portion that is empty in a case where the tool is caused to move from the first magazine to the second magazine, and conveys the tool to the first accommodation portion that is empty in a case where the tool is caused to move from the second magazine to the first magazine.

### Advantageous Effects of Invention

In the control device, the machine tool, the control method, and the computer program according to one embodiment of the present disclosure, by executing the first process to the fourth process in a state in which the second accommodation portion that is empty is disposed at the second replacement position, the tool conveying device conveys the tool to the second accommodation portion that is empty in a case where the tool is caused to move from the first magazine to the second magazine, and conveys the tool to the first accommodation portion that is empty in a case where the tool is caused to move from the second magazine to the first magazine. Therefore, the collision between the tools can be prevented without providing a detection unit that detects the presence or absence of the tool.

### BRIEF DESCRIPTION OF THE DRAWINGS

[FIG. 1] FIG. 1 is a schematic perspective view of a machine tool according to Embodiment 1.
[FIG. 2] FIG. 2 is a schematic left side view of the machine tool.
[FIG. 3] FIG. 3 is a schematic plan view of the machine tool.
[FIG. 4] FIG. 4 is a partially enlarged view illustrating a configuration around a cover.
[FIG. 5] FIG. 5 is a cross-sectional view with a line V-V illustrated in FIG. 3 as a cutting line.
[FIG. 6] FIG. 6 is a schematic front view of a pod in a non-gripping state.
[FIG. 7] FIG. 7 is a schematic cross-sectional view with a line VII-VII in FIG. 6 as a cutting line.
[FIG. 8] FIG. 8 is a schematic cross-sectional view of the pod in a gripping state.
[FIG. 9] FIG. 9 is a partially enlarged view illustrating a tool conveying path between an exchange position arm of a first magazine and an exchange position arm of a second magazine.
[FIG. 10] FIG. 10 is a block diagram illustrating a control device, a motor, an electromagnetic valve, a notification unit, and an operation unit.
[FIG. 11] FIG. 11 is an explanatory view illustrating a tool conveying process of accommodating a tool T2 accommodated in the second magazine in the first magazine.
[FIG. 12] FIG. 12 is an explanatory view illustrating a tool conveying process of accommodating the tool accommodated in the second magazine in the first magazine in a case where an operator forgets to input a tool identification number.
[FIG. 13] FIG. 13 is an explanatory view illustrating a tool conveying process in which a second process is omitted and only a first process, a third process, and a fourth process are executed in the tool conveying process of FIG. 11.
[FIG. 14] FIG. 14 is an explanatory view illustrating a tool conveying process of accommodating a tool accommodated in the first magazine in the second magazine.
[FIG. 15] FIG. 15 is an explanatory view illustrating a tool conveying process of accommodating the tool accommodated in the first magazine in the second magazine in a case where the operator forgets to input the tool identification number.
[FIG. 16] FIG. 16 is an explanatory view illustrating a tool conveying process in which the fourth process is omitted and the first process, the second process, and the third process are continuously executed in the tool conveying process of FIG. 14.
[FIG. 17] FIG. 17 is an explanatory view illustrating a tool conveying process in which in the tool conveying process of FIG. 14, the fourth process is omitted, and the first process, the second process, and the third process are continuously executed so as to avoid collision between a tool disposed at a first replacement position and a tool disposed at a second replacement position in the first process.
[FIG. 18] FIG. 18 is an explanatory view illustrating a tool conveying process of accommodating the tool accommodated in the first magazine in the second magazine and accommodating the tool accommodated in the second magazine in the first magazine.
[FIG. 19] FIG. 19 is a flowchart illustrating an arm specifying process of specifying an arm to be indexed to the first replacement position and the second replacement position by a controller.
[FIG. 20] FIG. 20 is a flowchart illustrating an arm specifying process of specifying an arm to be indexed to the first replacement position and the second replacement position by the controller.
[FIG. 21] FIG. 21 is a flowchart illustrating a tool conveying process.
[FIG. 22] FIG. 22 is a flowchart illustrating the tool conveying process.
[FIG. 23] FIG. 23 is a flowchart illustrating an arm specifying process of specifying arms to be indexed to the first replacement position and the second replacement position by a controller according to Embodiment 2.

### DETAILED DESCRIPTION

### (Embodiment 1)

Hereinafter, the present invention will be described with reference to the drawings illustrating a machine tool according to Embodiment 1. In the following description, "upper", "lower", "front", "rear", "left", and "right" in the drawings are used. The terms "upper", "lower", "front", "rear", "left", and "right" are merely direction notations used for facilitating understanding, and the direction notations are not limited thereto.

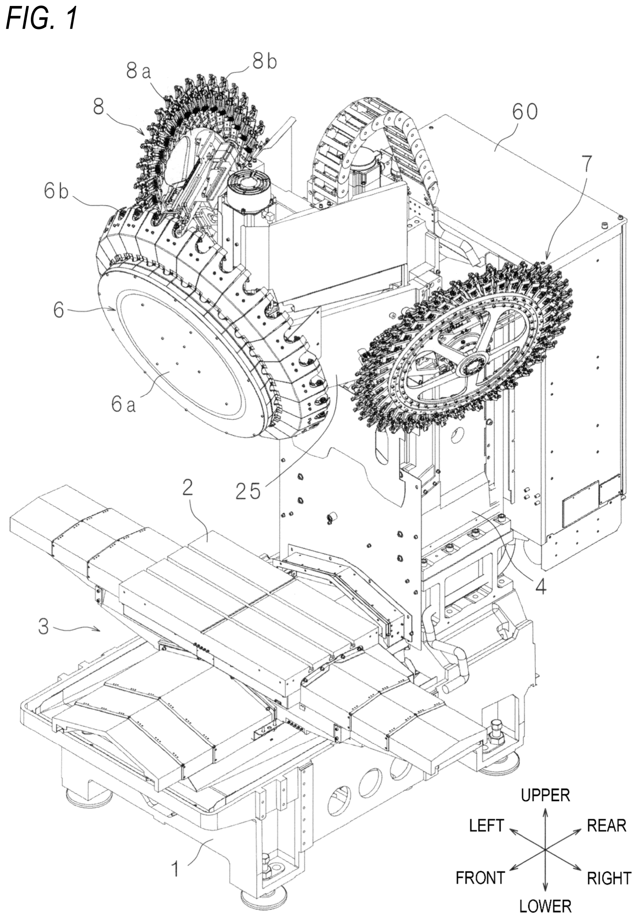

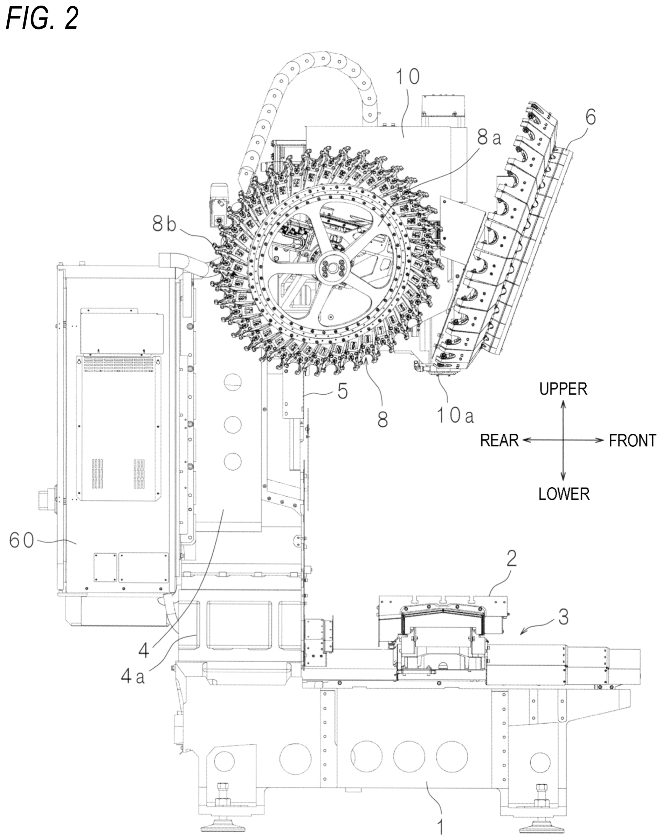

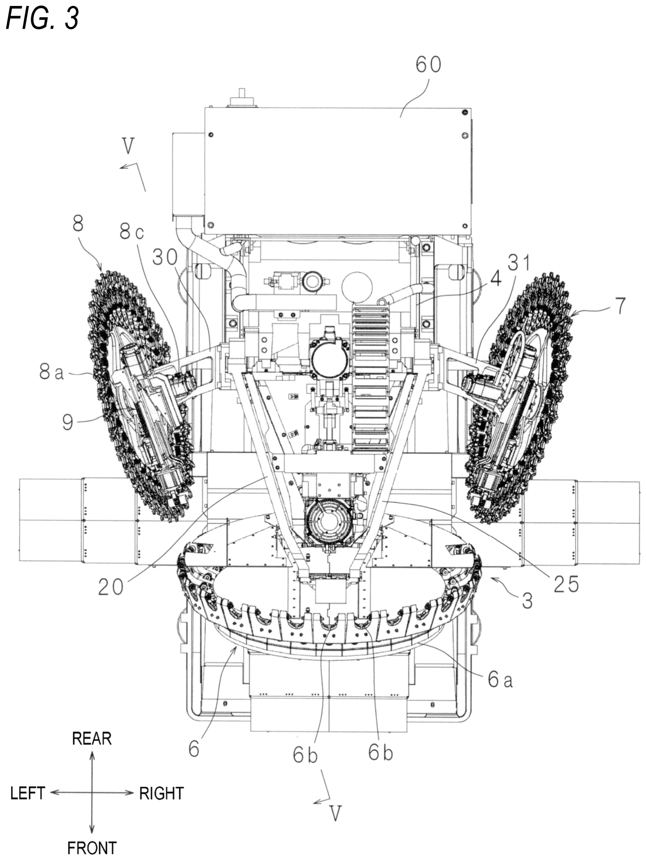

The machine tool will be described with reference to FIGS. 1 to 5. The machine tool includes a base 1, a workpiece holding portion 2, an XY moving mechanism 3, an upright column 4, a Z moving mechanism 5, a first magazine 6, two second magazines 7 and 8, and a main spindle head 10. The base 1 is formed in a rectangular shape in a plan view and extends in a front-rear direction. The XY moving mechanism 3 movable in a left-right direction (X direction) and the front-rear direction (Y direction) is provided on an upper front side of the base 1. The workpiece holding portion 2 is provided on an upper side of the XY moving mechanism 3. The XY moving mechanism 3 allows the workpiece holding portion 2 to move in the X and Y directions. The workpiece holding portion 2 holds a workpiece.

The upright column 4 is provided on an upper rear side of the base 1 via a height adjustment portion 4a. The upright column 4 has a rectangular parallelepiped shape having a front surface, a rear surface, and left and right side surfaces. A control device 60 is provided on the rear surface of the upright column 4. The control device 60 controls driving of the machine tool. The Z moving mechanism 5 movable in an up-down direction (Z direction) is provided on the front surface of the upright column 4. The Z moving mechanism 5 is provided with the main spindle head 10. The main spindle head 10 includes a main spindle 10a extending vertically. A tool is mounted on a lower end portion of the main spindle 10a.

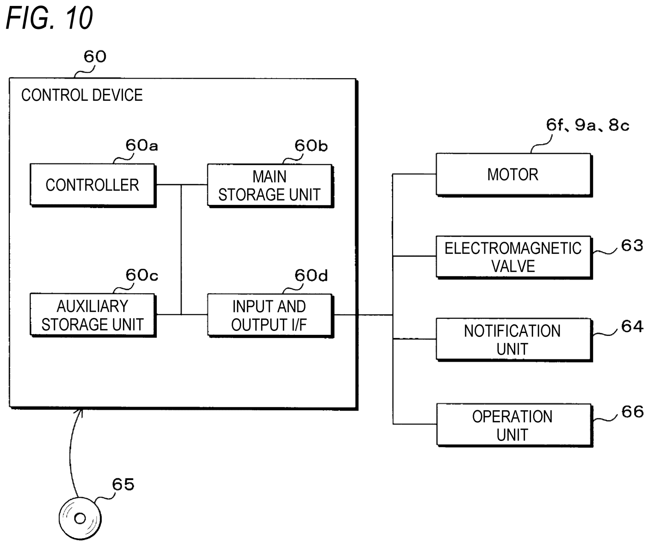

The first magazine 6 for accommodating a plurality of tools is provided on a front side of the main spindle head 10. The first magazine 6 is connected to the upright column 4 via two first support portions 20 and 25. The first support portion 20 on one side protrudes forward from a front left side of the upright column 4. The first support portion 25 on the other side protrudes forward from a front right side of the upright column 4. The first magazine 6 is connected to a protruding end portion of each of the first support portions 20 and 25. The first magazine 6 includes a disk 6a, arms 6b, and covers 6d. A motor 6f (see FIG. 10) is connected to the disk 6a, and the disk 6a rotates about its central axis by driving of the motor 6f. A plurality of arms 6b are radially provided on a peripheral portion of the disk 6a. Each arm 6b has a bifurcated shape and holds a tool. That is, each arm 6b accommodates a tool. The cover 6d covers an outer side of each arm 6b. The cover 6d is rotatable, rotates together with the arm 6b at the time of tool change with the main spindle, and does not hinder the tool change. Each arm 6b is not provided with a detection unit for detecting presence or absence of a tool. The arm 6b constitutes a first accommodation portion.

The first magazine 6 is disposed such that the central axis of the disk 6a extends substantially in the front-rear direction and the disk 6a is inclined forward. A lower end position of the first magazine 6 is a tool exchange position. In a case where the tool is to be attached to the main spindle, the arm 6b gripping the tool is disposed at the tool exchange position, and the Z moving mechanism 5 is moved downward. Based on the downward movement of the Z moving mechanism 5, the main spindle 10a attaches the tool gripped by the arm 6b. In a case where the tool is removed from the main spindle 10a, an empty arm 6b is disposed at the tool exchange position, and the Z moving mechanism 5 is moved upward. Based on the upward movement of the Z moving mechanism 5, the arm 6b grips the tool of the main spindle 10a, and the tool is removed from the main spindle 10a.

The tool attached to the main spindle 10a machines the workpiece held by the workpiece holding portion 2. The XY moving mechanism 3 adjusts front-rear and left-right positions of the workpiece with respect to the tool (main spindle), and the Z moving mechanism 5 adjusts an up-down position of the tool.

The second magazine 7 is disposed on the right side of the upright column 4, and the second magazine 8 is disposed on the left side. A second support portion 30 connects a rear end portion of the first support portion 20 on the left side, that is, a connection portion of the first support portion 20 with the upright column 4, and the second magazine 8. The second support portion 30 supports the second magazine 8. A second support portion 31 connects a rear end portion of the first support portion 25 on the right side, that is, a connection portion of the first support portion 25 with the upright column 4, and the second magazine 7. The second support portion 31 supports the second magazine 7.

The second magazine 8 includes a disk-shaped wheel 8a, a plurality of arms 8b, and a motor 8c. The motor 8c is fixed to the second support portion 30. A radial central portion of the wheel 8a protrudes in an axial direction. The wheel 8a has a truncated cone shape as a whole with the radial central portion as a vertex. The plurality of arms 8b are provided on an outer periphery of the wheel 8a. The plurality of arms 8b are arranged in a circumferential direction of the wheel 8a. Each arm 8b has a bifurcated shape and can hold a tool. That is, each arm 8b accommodates a tool. In two adjacent arms 8b, a part of each arm 8b overlaps in the circumferential direction of the wheel 8a. The plurality of arms 8b may be radially provided on the outer periphery of the wheel 8a such that the two adjacent arms 8b do not overlap each other. The second magazine 8 accommodates a plurality of tools by the plurality of arms 8b. The radial central portion at a recessed side of the wheel 8a is connected to the motor 8c and a speed reducer (not illustrated). Rotation of the motor 8c causes the wheel 8a and the arm 8b to rotate in the circumferential direction. The arm 8b constitutes a second accommodation portion. Each arm 8b is not provided with a detection unit for detecting the presence or absence of a tool.

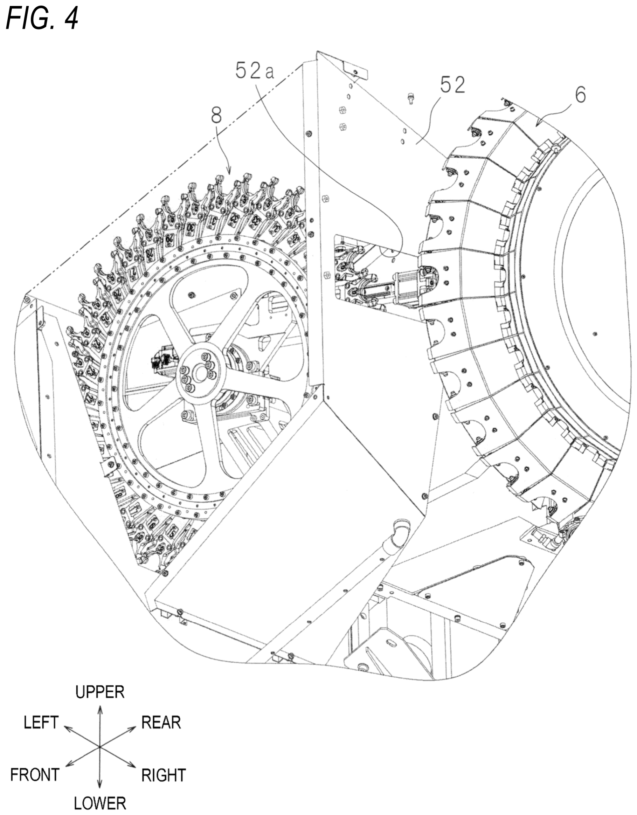

As illustrated in FIG. 4, the second magazine 8 is covered by a cover 52. The cover 52 has a front surface, a rear surface, a left surface, and a lower surface. The front surface, rear surface, left surface, and lower surface of the cover 52 cover a front side, a rear side, a left side, and a lower side of the second magazine 8. An opening 52a is formed in the front surface of the cover 52. The opening 52a is opened and closed by a shutter (not illustrated). The shutter is provided with a drive source (not illustrated) such as an air cylinder and an electromagnetic valve. A controller 60a controls the electromagnetic valve to open and close the shutter. In FIG. 4, illustration of the left surface is omitted such that the second magazine 8 can be visually recognized.

In a case where a tool is conveyed between the first magazine 6 and the second magazine 8, the tool passes through the opening 52a. It is difficult for the operator to approach the arm 8b due to the cover 52. The operator cannot attach and remove the tool to and from the arm 8b.

Although the right side of the second magazine 8 is not covered by the cover 52, since the upright column 4 is provided, it is difficult for the operator to approach the arm 8b, and the operator cannot attach and remove the tool to and from the arm 8b. Further, although the upper side of the second magazine 8 is not covered by the cover 52, since a position of the second magazine 8 on the upper side is high, it is difficult for the operator to approach the arm 8b, and the operator cannot attach and remove the tool to and from the arm 8b. That is, the cover 52 restricts attachment and removal of the tool to and from the second magazine 8 without using a tool conveying device 9. The second magazine 7 is also covered with a cover (not illustrated) having a similar configuration.

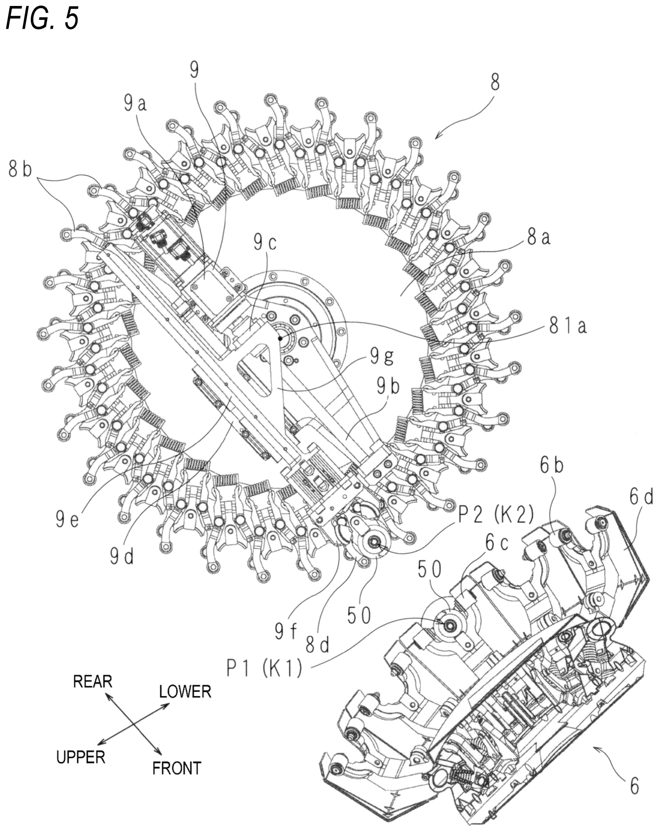

As illustrated in FIG. 5, the arm 6b of the first magazine 6 is closest to the arm 8b of the second magazine 8 at a first replacement position P1, and the arm 8b of the second magazine 8 is closest to the arm 6b of the first magazine 6 at a second replacement position P2. That is, a distance between each arm 6b of the first magazine 6 and each arm 8b of the second magazine 8 is shortest between the arm 6b at the first replacement position P1 and the arm 8b at the second replacement position P2. Therefore, a tool 50 is conveyed between the first replacement position P1 and the second replacement position P2.

Hereinafter, the arm 6b of the first magazine 6 disposed at the first replacement position P1 is referred to as a replacement position arm 6c, and the arm 8b of the second magazine 8 disposed at the second replacement position P2 is referred to as a replacement position arm 8d. The tool conveying device 9 performs tool exchange between the replacement position arm 6c and the replacement position arm 8d.

The tool conveying device 9 is disposed on an inner side of the wheel 8a. The tool conveying device 9 conveys the tool. The tool conveying device 9 includes a motor 9a, a ball screw 9b, a nut 9c, a track 9d, a slider 9e, a pod 9f, and a connection portion 9g. The pod 9f constitutes a holding portion. The second support portion 30 supports the ball screw 9b and the track 9d. The ball screw 9b is connected to a rotating shaft of the motor 9a. The nut 9c is connected to the ball screw 9b.

As illustrated in FIG. 5, the track 9d is disposed adjacent to the ball screw 9b. The track 9d is fixed at a position deviated from a central axis 81a of the wheel 8a. The track 9d extends along a long side direction of the replacement position arm 8d. One end portion of the track 9d faces the replacement position arm 8d. The slider 9e is slidably provided on the track 9d. The pod 9f is attached to the slider 9e. The connection portion 9g connects the slider 9e and the nut 9c. By driving of the motor 9a, the ball screw 9b rotates, the nut 9c moves along the ball screw 9b, and the slider 9e, the connection portion 9g, and the pod 9f move along the track 9d. The pod 9f constitutes a gripping portion. The motor 9a, the ball screw 9b, the nut 9c, the track 9d, the slider 9e, and the connection portion 9g constitute a moving mechanism.

The pod 9f grips a tool. That is, the pod 9f performs a gripping operation of gripping the tool. The pod 9f moves between a first gripping position K1 and a second gripping position K2. The first gripping position K1 is a position at which the pod 9f grips the tool 50 gripped by the replacement position arm 6c, and is a position corresponding to the first replacement position P1. The second gripping position K2 is a position at which the pod 9f grips the tool 50 gripped by the replacement position arm 8d, and is a position corresponding to the second replacement position P2. The gripping operation of the pod 9f includes a gripping operation with respect to the arm 6b accommodating the tool and a gripping operation with respect to the empty arm 6b.

The tool conveying device 9 transfers the tool between the arm 6b of the first magazine 6 and the arm 8b of the second magazine 8. That is, the second magazine 8 is configured to be able to exchange tools with the first magazine 6. By providing the second magazine 8, the number and types of usable tools can be increased as compared with a case where only the first magazine 6 is provided.

The second magazine 7 is disposed symmetrically with respect to the second magazine 8, and a configuration thereof is similar to that of the second magazine 8, and thus detailed description thereof will be omitted. A tool conveying device (not illustrated) is also provided on an inner side of the second magazine 7, and the tool conveying device transfers the tool between the arm 6b of the first magazine 6 and the arm of the second magazine 7.

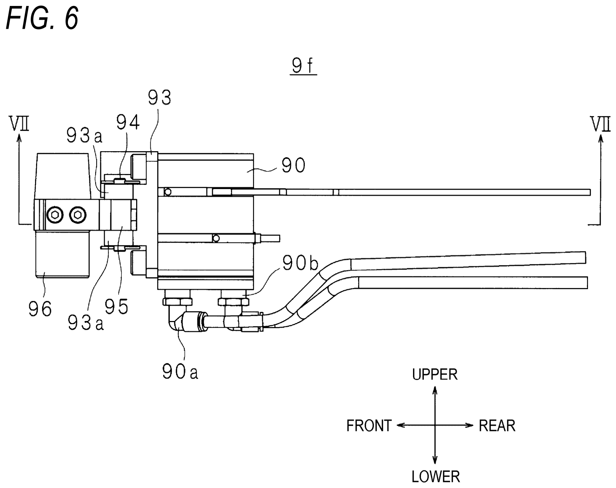

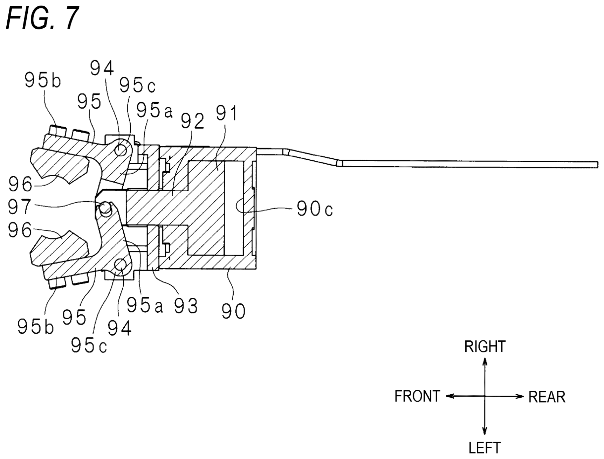

The pod 9f will be described with reference to FIGS. 6 and 7. The pod 9f includes a cylinder 90, a piston 91, a rod 92, a support plate 93, two pivots 94, two arms 95, two hands 96, and a connection shaft 97.

The cylinder 90 includes a tubular portion extending in the front-rear direction, a front surface portion provided at a front end portion of the tubular portion, and a rear surface portion provided at a rear end portion of the tubular portion. The support plate 93 is provided on the front surface portion of the cylinder 90. A chamber 90c is provided inside the cylinder 90. The piston 91 is accommodated in the chamber 90c. The piston 91 is movable in the axial direction of the cylinder 90. The rod 92 protrudes toward the front side from the piston 91, penetrates the front surface portion of the cylinder 90 and the support plate 93, and protrudes from the support plate 93. The rod 92 moves back and forth by a back-and-forth movement of the piston 91. The piston 91 corresponds to a moving portion.

Two protruding portions 93a protrude toward the front side from the support plate 93. The two protruding portions 93a are separated from each other vertically, and the rod 92 is located between the two protruding portions 93a in the up-down direction. The protruding portion 93a extends laterally. The pivot 94 extending vertically is provided between a left end portion of the upper protruding portion 93a and a left end portion of the lower protruding portion 93a. The pivot 94 extending vertically is provided between a right end portion of the upper protruding portion 93a and a right end portion of the lower protruding portion 93a.

The arm 95 is connected to each of the pivots 94 on the left and right sides. As illustrated in FIG. 7, the arm 95 has an L shape in a plan view in which a first side portion 95a and a second side portion 95b are connected at a substantially right angle. A corner portion 95c of the arm 95 is connected to the pivot 94.

The first side portion 95a of the arm 95 on the left side protrudes rightward from the corner portion 95c of the arm 95, and the second side portion 95b of the arm 95 on the left side protrudes forward from the corner portion 95c of the arm 95. The first side portion 95a of the arm 95 on the right side protrudes leftward from the corner portion 95c of the arm 95, and the second side portion 95b of the arm 95 on the right side protrudes forward from the corner portion 95c of the arm 95.

The first side portion 95a of the arm 95 on the left side, the first side portion 95a of the arm 95 on the right side, and the rod 92 are connected by the connection shaft 97. The first side portion 95a of the arm 95 on the left side and the first side portion 95a of the arm 95 on the right side are rotatable about the connection shaft 97.

The hand 96 is provided on the right side of the second side portion 95b of the arm 95 on the left side. The hand 96 is provided on the left side of the second side portion 95b of the arm 95 on the right side. The hand 96 corresponds to the gripping portion.

The hand 96 has a columnar shape extending vertically. A curved surface curved to protrude leftward in a plan view is formed on a right surface of the hand 96 on the left side. A curved surface curved to protrude rightward in a plan view is formed on a left surface of the hand 96 on the right side. A curvature of the curved surface corresponds to a curvature of a peripheral surface of the tool 50.

In a case where the electromagnetic valve 63 is switched to a second position, compressed air is supplied from a second port 90b to the rear side of the chamber 90c, air on the front side of the chamber 90c is discharged from a first port 90a, and as illustrated in FIG. 7, the piston 91 is located at a front end portion of the chamber 90c, and the rod 92 moves to the front side. The two second side portions 95b are inclined with respect to the rod 92 such that a distance between the two second side portions 95b in the left-right direction increases toward the front side. That is, the two hands 96 are at positions separated from each other and are in a non-gripping state in which the tool 50 is not gripped.

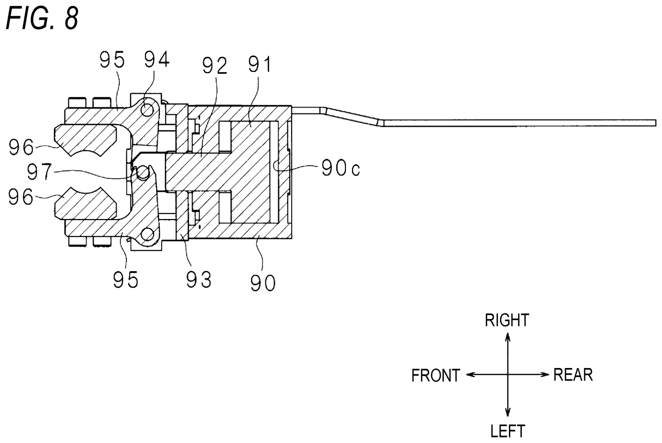

FIG. 8 is a schematic cross-sectional view of the pod 9f in a gripping state. In a case where the electromagnetic valve 63 is switched to a first position, air on the rear side of the chamber 90c is discharged from the second port 90b, compressed air is supplied from the first port 90a to the front side of the chamber 90c, and as illustrated in FIG. 8, the piston 91 is located at a center portion of the chamber 90c in the front-rear direction, and the rod 92 moves to the rear side with respect to that in the state of FIG. 7. The two second side portions 95b are substantially parallel to each other. That is, the two hands 96 are closer to each other than in the state of FIG. 7, and are in the gripping state in which the tool 50 is gripped. Postures and positions of the piston 91, the rod 92, the arms 95, and the hands 96 in FIG. 8 are postures and positions in a state in which the two hands 96 grip the tool 50, that is, in a case where the approach of the hands 96 is prevented by the tool 50.

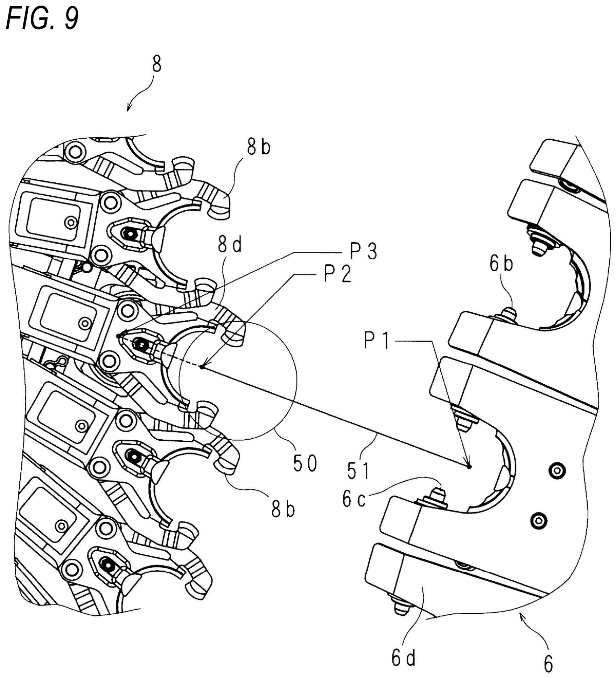

FIG. 9 is a partially enlarged view illustrating a tool conveying path 51 between the replacement position arm 6c of the first magazine 6 and the replacement position arm 8d of the second magazine 8. As illustrated in FIG. 9, the tool conveying device 9 conveys the tool 50 such that a center of the tool 50 moves along the tool conveying path 51. The tool conveying path 51 forms a line segment. One end of the tool conveying path 51 is located on an inner side of the replacement position arm 6c, and the other end is located on an inner side of the replacement position arm 8d. The position of the one end of the tool conveying path 51 is the first replacement position P1. The first replacement position P1 is a center position of the tool 50 held by the replacement position arm 6c. The position of the other end of the tool conveying path 51 is the second replacement position P2. The second replacement position P2 is a center position of the tool 50 held by the replacement position arm 8d. P3 in FIG. 9 is a non-interference position.

The non-interference position P3 is a position away from the second replacement position P2 on an opposite side of the first replacement position P1 and is a position overlapping the second magazine 8. In a case where the pod 9f is at the non-interference position P3, the first magazine 6 and the second magazine 8 are rotatable without interfering with the pod 9f.

As described above, the first gripping position K1 is a position at which the pod 9f grips the tool 50 gripped by the replacement position arm 6c. The first replacement position P1 is a position at which the replacement position arm 6c grips the tool 50. The first gripping position K1 and the first replacement position P1 are different positions in the axial direction of the tool 50 gripped by the replacement position arm 6c, and are the same position in the radial direction of the tool 50 gripped by the replacement position arm 6c. That is, the first gripping position K1 and the first replacement position P1 are positions overlapping each other when viewed from the axial direction of the tool 50 gripped by the replacement position arm 6c.

As described above, the second gripping position K2 is a position at which the pod 9f grips the tool 50 gripped by the replacement position arm 8d. The second replacement position P2 is a position at which the replacement position arm 8d grips the tool 50. The second gripping position K2 and the second replacement position P2 are different positions in the axial direction of the tool 50 gripped by the replacement position arm 8d, and are the same position in the radial direction of the tool 50 gripped by the replacement position arm 8d. That is, the second gripping position K2 and the second replacement position P2 are positions overlapping each other when viewed from the axial direction of the tool 50 gripped by the replacement position arm 8d.

FIG. 10 is a block diagram illustrating the control device 60, the motors 6f, 9a, and 8c, the electromagnetic valve 63, a notification unit 64, and an operation unit 66. The machine tool includes the control device 60. The control device 60 includes the controller 60a, a main storage unit 60b, an auxiliary storage unit 60c, and an input and output interface (input and output I/F) 60d. The controller 60a includes, for example, a processor or a logic circuit. The processor includes, for example, a CPU, an MPU, a GPU, or the like. The logic circuit includes, for example, an FPGA or an ASIC. The main storage unit 60b includes, for example, a RAM. The auxiliary storage unit 60c includes a rewritable storage device, such as an EEPROM, a flash ROM, and a hard disk. The input and output I/F 60d is an interface connected to the motors 6f, 9a, and 8c, the electromagnetic valve 63, the notification unit 64, the operation unit 66, and the like.

The electromagnetic valve 63 is a valve configured to control the supply of air to the first port 90a and second port 90b to be described later. The first port 90a and the second port 90b are connected to an air source that supplies compressed air. The electromagnetic valve 63 is provided between the air source and the first port 90a and the second port 90b. The electromagnetic valve 63 can be switched between the first position at which the compressed air is supplied to the first port 90a and the air is discharged from the second port 90b and the second position at which the air is discharged from the first port 90a and the compressed air is supplied to the second port 90b. The notification unit 64 is, for example, a display screen, a lamp, a buzzer, or the like, and in a case where an abnormality is detected, notifies the abnormality by displaying information indicating the abnormality, lighting or flashing light, or emitting a sound.

The auxiliary storage unit 60c stores a control program, that is, a program product. The controller 60a reads the control program from the auxiliary storage unit 60c to the main storage unit 60b and executes the control program. The control program includes a machining instruction of the workpiece, a conveying instruction of conveying the tool between the first magazine 6 and the second magazines 7 and 8, and the like. The conveying instruction constitutes a first moving instruction and a second moving instruction. For the auxiliary storage unit 60c, the controller 60a stores data generated by the execution of the control program to the auxiliary storage unit 60c. The controller 60a transmits a drive signal to the motors 6f, 9a, and 8c, the electromagnetic valve 63, and the notification unit 64 via the input and output I/F 60d as necessary. The operation unit 66 is a touch panel, a keyboard, a switch, a mouse, or the like that receives input of information from the operator.

The auxiliary storage unit 60c stores an arm identification number for identifying each arm of the first magazine 6 and the second magazines 7 and 8, and a tool identification number for identifying the tool. The arm identification number and the tool identification number correspond to each other. In a case where the tool is conveyed between the first magazine 6 and the second magazine 7 and 8, the controller 60a updates the arm identification number and the tool identification number so as to achieve a correspondence relation after the conveying. The tool identification number is not stored for an arm identification number of an empty arm. The tool identification number is an example of information for identifying the tool, and the tool may be identified by characters. The arm identification number is an example of information for identifying the arm, and the arm may be identified by characters.

In a case where the operator attaches the tool 50 to the arm 6b of the first magazine 6, the operator operates the operation unit 66 to input the tool identification number of the attached tool 50 and the arm identification number of the arm 6b to which the tool 50 is attached in association with each other. The auxiliary storage unit 60c stores the input arm identification number and tool identification number. In a case where the operator removes the tool 50 from the arm 6b of the first magazine 6, the operator operates the operation unit 66 to delete the tool identification number associated with the arm identification number of the arm 6b from which the tool 50 is removed.

As described above, due to the cover 52, the operator cannot attach and remove the tool to and from the arms of the second magazines 7 and 8. The attachment and removal of the tool to and from the second magazines 7 and 8 are performed between the first magazine 6 and the second magazines 7 and 8 by the tool conveying device 9.

The control program may be stored in a storage medium 65, for example, an optical disk, a flash memory, or a hard disk, and may be downloaded from the storage medium 65 to the auxiliary storage unit 60c. Alternatively, the control program may be downloaded from an external server to the auxiliary storage unit 60c via a network (not illustrated). A process by the control program, for example, a tool conveying process to be described later may be realized by a server or terminal connected to the control device 60 via the network, or may be realized by a distributed process by a server and a device other than the server, for example, a terminal or a second server.

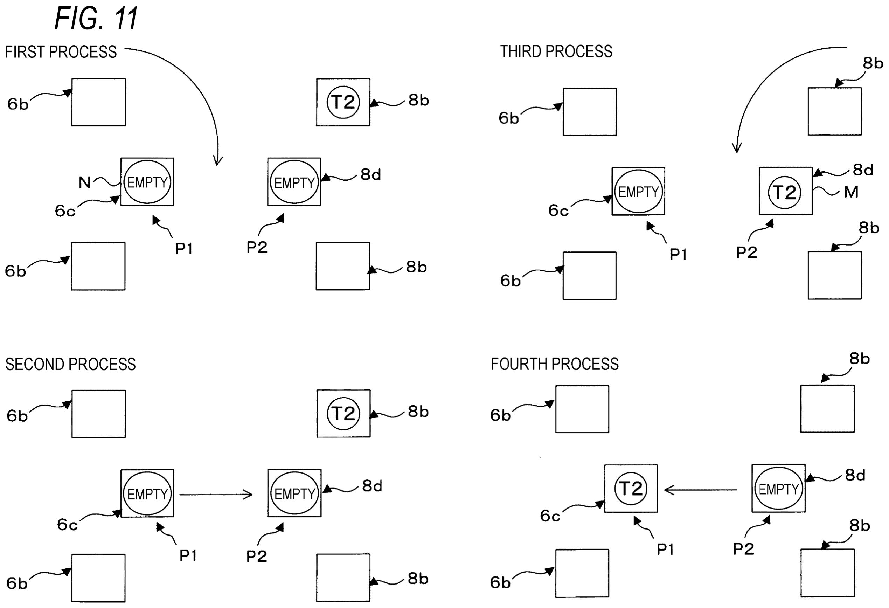

FIG. 11 is an explanatory view illustrating the tool conveying process of accommodating a tool T2 accommodated in the second magazine 8 in the first magazine 6. In an initial state, the replacement position arm 8d, that is, the arm 8b disposed at the second replacement position P2 is empty.

The controller 60a executes a first process of indexing a specified arm 6b, that is, an arm 6b with an arm identification number N, at the first replacement position P1. The arm identification number N constitutes first information. In the case of FIG. 11, the specified arm 6b is an empty arm 6b. The controller 60a executes the first process of indexing the specified arm 6b at the first replacement position P1. Therefore, the replacement position arm 6c is empty.

Next, the controller 60a executes a second process of conveying the tool from the replacement position arm 6c to the replacement position arm 8d using the tool conveying device 9. In the case of FIG. 11, the replacement position arm 6c is empty, and the tool does not move in the second process. That is, in the second process, the controller 60a performs a conveying operation of the tool from the first replacement position P1 to the second replacement position P2. The second process may or may not involve movement of the tool.

Next, the controller 60a executes a third process of indexing a specified arm 8b, that is, an arm 8b with the arm identification number M, at the second replacement position P2. The arm identification number M constitutes second information. In the case of FIG. 11, the specified arm 8b accommodates the tool T2. Therefore, the replacement position arm 8d accommodates the tool T2.

Next, the controller 60a executes a fourth process of conveying the tool from the replacement position arm 8d to the replacement position arm 6c using the tool conveying device 9. In the case of FIG. 11, the tool T2 is conveyed from the replacement position arm 8d to the replacement position arm 6c. That is, in the fourth process, the controller 60a performs a conveying operation of the tool from the second replacement position P2 to the first replacement position P1. The fourth process may or may not involve movement of the tool.

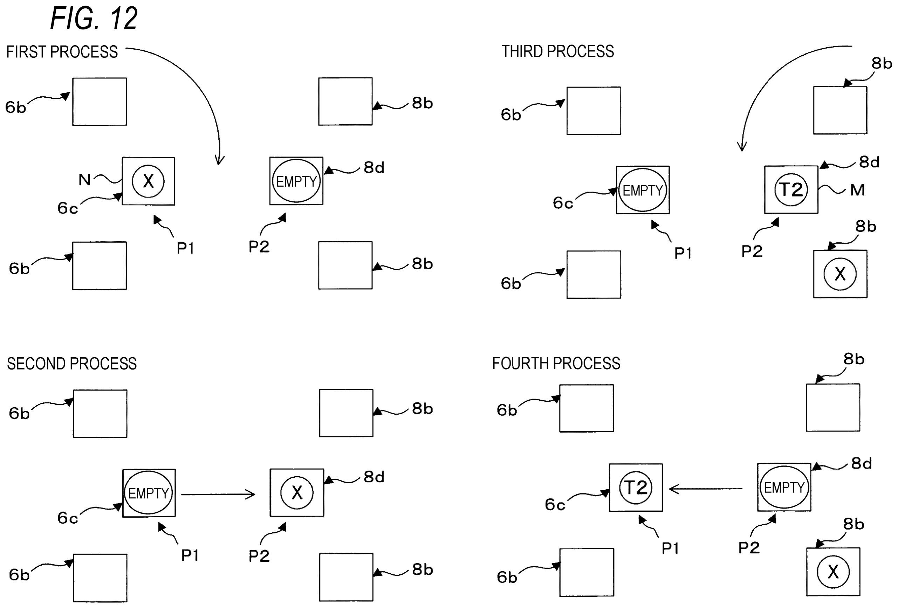

FIG. 12 is an explanatory view illustrating the tool conveying process of accommodating the tool T2 accommodated in the second magazine 8 in the first magazine 6 in a case where the operator forgets to input a tool identification number. In a case where the operator attaches the tool to the arm 6b, the operator may forget to input the tool identification number of the attached tool in association with the arm identification number of the arm 6b to which the tool is attached. X in FIG. 12 indicates a tool for which a tool identification number is not input.

The controller 60a executes the first process of indexing the specified arm 6b, that is, the arm 6b with the arm identification number N, at the first replacement position P1. In the case of FIG. 12, the specified arm 6b is an arm 6b to which the tool identification number is not input and which accommodates the tool X. That is, the controller 60a recognizes the arm 6b as empty. The controller 60a executes the first process of indexing the specified arm 6b at the first replacement position P1. Therefore, the replacement position arm 6c accommodates the tool X.

Next, the controller 60a executes a second process of conveying the tool from the replacement position arm 6c to the replacement position arm 8d using the tool conveying device 9. In the case of FIG. 12, the replacement position arm 6c accommodates the tool X, and the tool X is conveyed from the replacement position arm 6c to the replacement position arm 8d in the second process. The replacement position arm 6c is empty.

Next, the controller 60a executes a third process of indexing a specified arm 8b, that is, an arm 8b with the arm identification number M, at the second replacement position P2. In the case of FIG. 12, the specified arm 8b accommodates the tool T2. Therefore, the replacement position arm 8d accommodates the tool T2.

Next, the controller 60a executes a fourth process of conveying the tool from the replacement position arm 8d to the replacement position arm 6c using the tool conveying device 9. In the case of FIG. 12, the tool T2 is conveyed from the replacement position arm 8d to the replacement position arm 6c.

As illustrated in FIG. 12, even in a case where the operator forgets to input the tool identification number, collision between tools does not occur during the tool conveying.

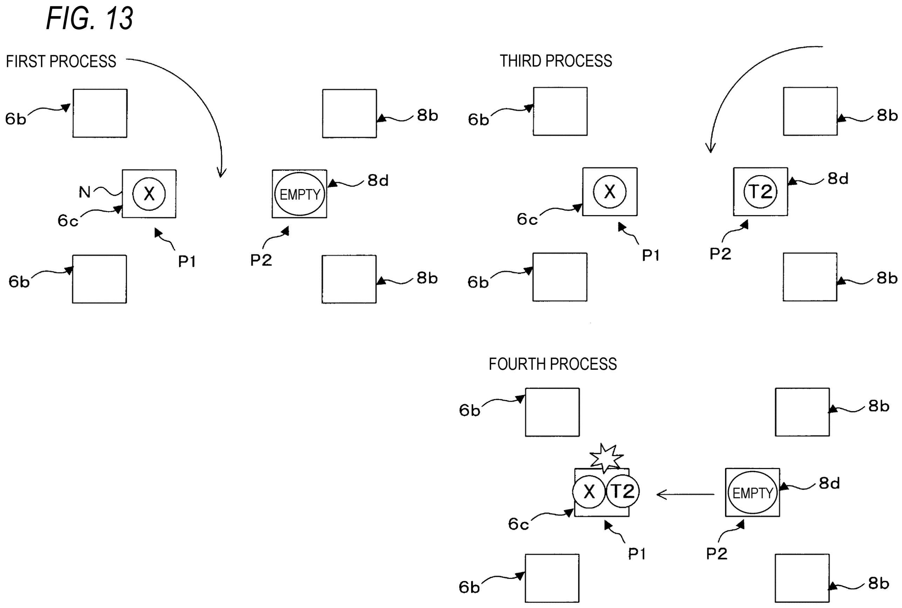

In the case of FIG. 11, the second process is not involved in the conveying of the tool T2. FIG. 13 is an explanatory view illustrating a tool conveying process in which the second process is omitted and only the first process, the third process, and the fourth process are executed in the tool conveying process of FIG. 11. The controller 60a executes the first process of indexing the specified arm 6b, that is, the arm 6b with the arm identification number N, at the first replacement position P1. The specified arm 6b is an empty arm 6b. However, the operator forgets to input the tool identification number, and the specified arm 6b accommodates the tool X. That is, the replacement position arm 6c accommodates the tool X.

The controller 60a executes the third process of indexing the specified arm 8b, that is, the arm 8b with the arm identification number M, at the second replacement position P2. In the case of FIG. 13, the specified arm 8b accommodates the tool T2. Therefore, the replacement position arm 8d accommodates the tool T2.

Next, the controller 60a executes a fourth process of conveying the tool from the replacement position arm 8d to the replacement position arm 6c using the tool conveying device 9. In the case of FIG. 13, the tool T2 is conveyed from the replacement position arm 8d to the replacement position arm 6c. The tool T2 collides with the tool X. In a case where the second process of FIG. 11 is omitted, when the operator forgets to input the tool identification number, the tools collide with each other. Therefore, the second process of FIG. 11 cannot be omitted.

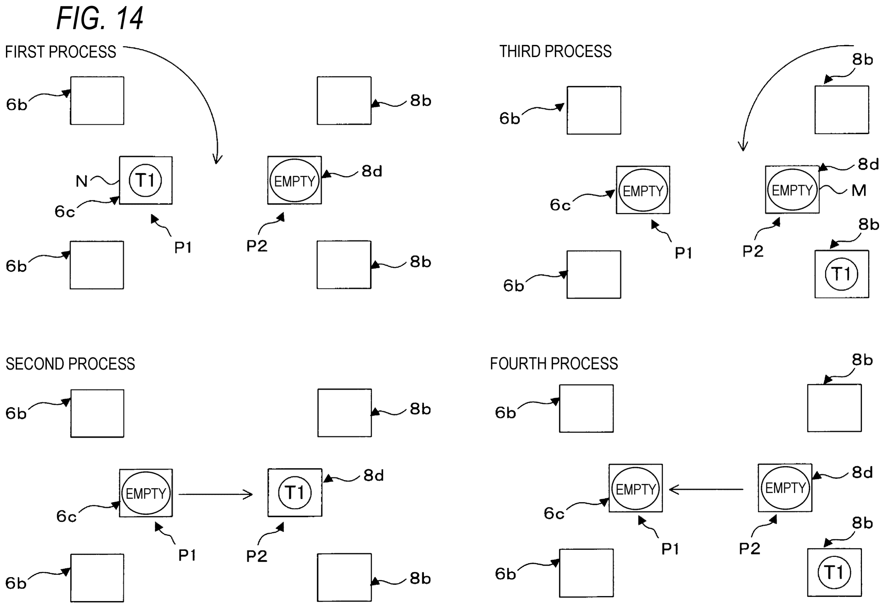

FIG. 14 is an explanatory view illustrating a tool conveying process of accommodating a tool T1 accommodated in the first magazine 6 in the second magazine 8. In the initial state, the replacement position arm 8d, that is, the arm 8b disposed at the second replacement position P2 is empty.

The controller 60a executes the first process of indexing the specified arm 6b, that is, the arm 6b with the arm identification number N, at the first replacement position P1. In the case of FIG. 14, the specified arm 6b accommodates the tool T1. The controller 60a executes the first process of indexing the specified arm 6b at the first replacement position P1. Therefore, the replacement position arm 6c accommodates the tool T1.

Next, the controller 60a executes a second process of conveying the tool from the replacement position arm 6c to the replacement position arm 8d using the tool conveying device 9. In the case of FIG. 14, the tool T1 is conveyed from the replacement position arm 6c to the replacement position arm 8d.

Next, the controller 60a executes a third process of indexing a specified arm 8b, that is, an arm 8b with the arm identification number M, at the second replacement position P2. In the case of FIG. 14, the specified arm 8b is an empty arm. Therefore, the replacement position arm 8d is an empty arm.

Next, the controller 60a executes a fourth process of conveying the tool from the replacement position arm 8d to the replacement position arm 6c using the tool conveying device 9. In the case of FIG. 14, the replacement position arm 8d is empty, and the tool does not move in the fourth process.

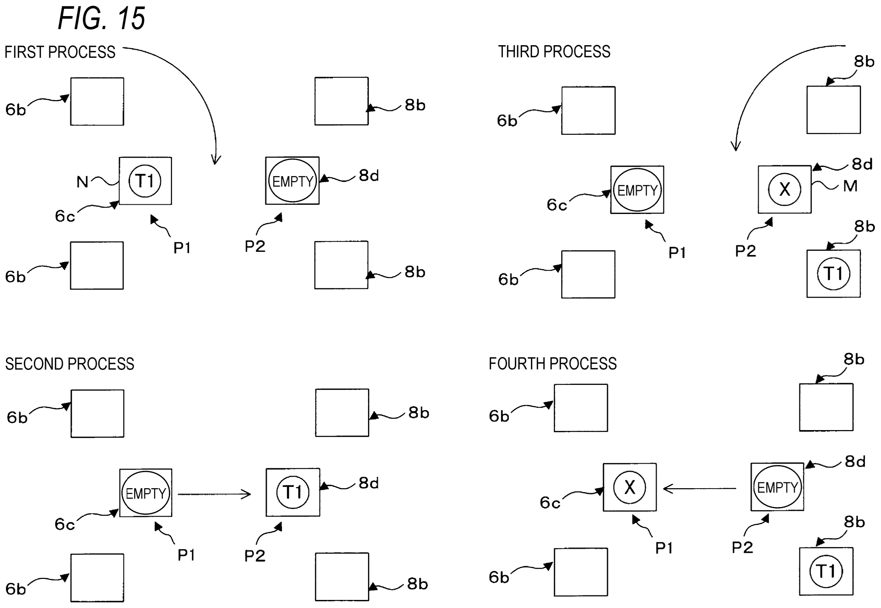

FIG. 15 is an explanatory view illustrating the tool conveying process of accommodating the tool T1 accommodated in the first magazine 6 in the second magazine 8 in a case where the operator forgets to input a tool identification number.

The controller 60a executes the first process of indexing the specified arm 6b, that is, the arm 6b with the arm identification number N, at the first replacement position P1. In the case of FIG. 15, the specified arm 6b accommodates the tool T1. The controller 60a executes the first process of indexing the specified arm 6b at the first replacement position P1. Therefore, the replacement position arm 6c accommodates the tool T1.

Next, the controller 60a executes a second process of conveying the tool from the replacement position arm 6c to the replacement position arm 8d using the tool conveying device 9. In the case of FIG. 15, the tool T1 is conveyed from the replacement position arm 6c to the replacement position arm 8d.

Next, the controller 60a executes a third process of indexing a specified arm 8b, that is, an arm 8b with the arm identification number M, at the second replacement position P2. In the case of FIG. 15, the specified arm 8b is an empty arm. However, the operator forgets to input the tool identification number, and the specified arm 8b accommodates the tool X. Therefore, the replacement position arm 8d accommodates the tool X.

Next, the controller 60a executes a fourth process of conveying the tool from the replacement position arm 8d to the replacement position arm 6c using the tool conveying device 9. In the case of FIG. 15, the tool X is conveyed from the replacement position arm 8d to the replacement position arm 6c.

As illustrated in FIG. 15, even in a case where the operator forgets to input the tool identification number, collision between the tools does not occur during the tool conveying.

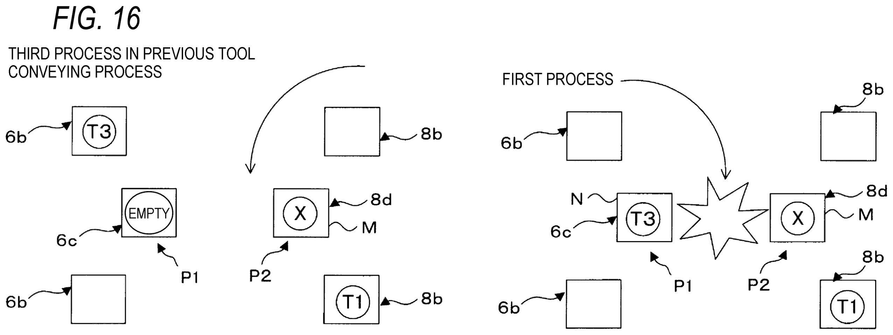

In the case of FIG. 14, the fourth process is not involved in the conveying of the tool T1. FIG. 16 is an explanatory view illustrating a tool conveying process in which the fourth process is omitted and the first process, the second process, and the third process are continuously executed in the tool conveying process of FIG. 14.

The controller 60a executes the third process of indexing the specified arm 8b, that is, the arm 8b with the arm identification number M, at the second replacement position P2 in the previous tool conveying process. In the case of FIG. 16, the specified arm 8b is an empty arm. However, the operator forgets to input the tool identification number, and the specified arm 8b accommodates the tool X. Therefore, the replacement position arm 8d accommodates the tool X.

Next, the controller 60a executes the first process of indexing the specified arm 6b, that is, the arm 6b with the arm identification number N, at the first replacement position P1. In the case of FIG. 16, the specified arm 6b accommodates a tool T3. The controller 60a executes the first process of indexing the specified arm 6b at the first replacement position P1. Therefore, the replacement position arm 6c accommodates the tool T3. The first replacement position P1 and the second replacement position P2 are positions where the arm 6b of the first magazine 6 and the arm 8b of the second magazine 8 are closest to each other. Therefore, in a case where the arm 6b accommodating the tool T3 is indexed to the first replacement position P1, the tool T3 collides with the tool X. Therefore, the fourth process of FIG. 14 cannot be omitted.

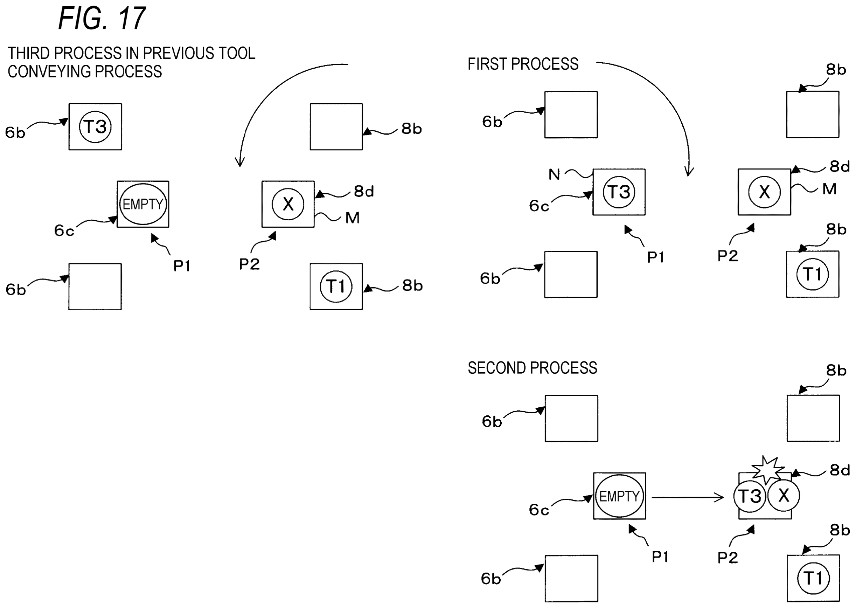

FIG. 17 is an explanatory view illustrating a tool conveying process in which in the tool conveying process of FIG. 14, the fourth process is omitted, and the first process, the second process, and the third process are continuously executed so as to avoid the collision between the tool disposed at the first replacement position P1 and the tool disposed at the second replacement position P2 in the first process.

The controller 60a executes the third process of indexing the specified arm 8b, that is, the arm 8b with the arm identification number M, at the second replacement position P2 in the previous tool conveying process. In the case of FIG. 17, the specified arm 8b is an empty arm. However, the operator forgets to input the tool identification number, and the specified arm 8b accommodates the tool X. Therefore, the replacement position arm 8d accommodates the tool X. In this case, the controller 60a indexes the arm 8b with the arm identification number M at a position slightly deviated from the second replacement position P2, that is, a position deviated from the tool conveying path 51.

Next, the controller 60a executes the first process of indexing the specified arm 6b, that is, the arm 6b with the arm identification number N, at the first replacement position P1. As described above, the arm 8b with the arm identification number M is at the position slightly deviated from the second replacement position P2. Therefore, a distance between the arm 6b with the arm identification number N and the arm 8b with the arm identification number M is longer than that in a case where the arms 6b and 8b are disposed at the first replacement position P1 and the second replacement position P2. Therefore, during the first process, the tool T3 accommodated in the arm 6b with the arm identification number N does not collide with the tool X accommodated in the arm 8b with the arm identification number M. In other words, in the third process of the previous tool conveying process, the controller 60a indexes the arm 8b with the arm identification number M to the position slightly deviated from the second replacement position P2 such that the tools do not collide with each other in the first process of the subsequent tool conveying process. For the controller 60a, after the first process and before the execution of the second process, the controller 60a positions the arm 8b with the arm identification number M at the second replacement position P2.

Next, the controller 60a executes a second process of conveying the tool from the replacement position arm 6c to the replacement position arm 8d using the tool conveying device 9. In the case of FIG. 17, the tool T3 is conveyed from the replacement position arm 6c to the replacement position arm 8d. The tool T3 collides with the tool X. In a case where the fourth process of FIG. 14 is omitted, when the operator forgets to input the tool identification number, the tools collide with each other. Therefore, the fourth process of FIG. 14 cannot be omitted. That is, even in a case where the operation of avoiding the collision between the tool disposed at the first replacement position P1 and the tool disposed at the second replacement position P2 is performed in the first process, the fourth process of FIG. 14 cannot be omitted.

The tool conveying device 9 according to the embodiment conveys the tool linearly, but the conveying of the tool is not limited to the linear conveying. For example, a tool conveying device including an arm capable of linear movement and rotational movement may be used. In this case, the first replacement position, the second replacement position, and the non-interference position are not necessarily located on the same straight line.

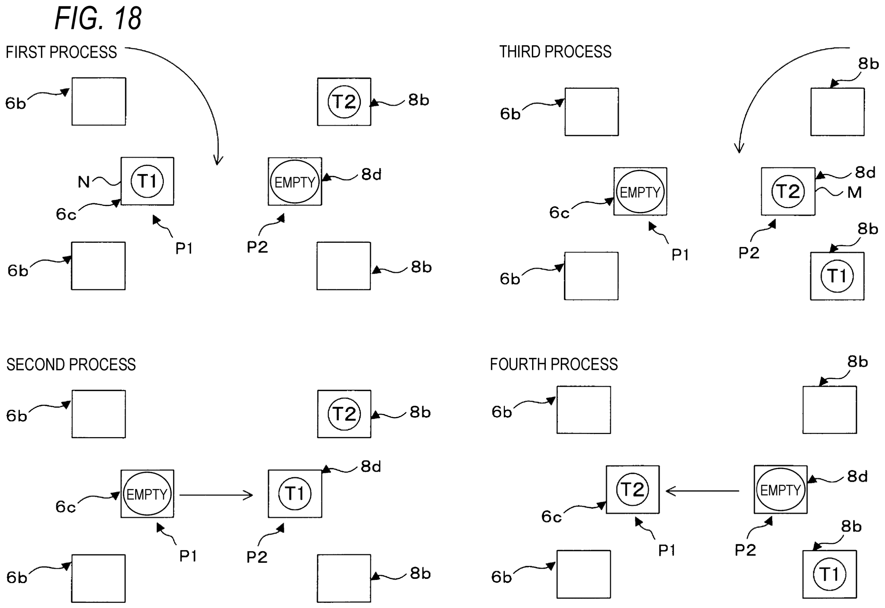

FIG. 18 is an explanatory view illustrating a tool conveying process of accommodating the tool T1 accommodated in the first magazine 6 in the second magazine 8 and accommodating the tool T2 accommodated in the second magazine 8 in the first magazine 6. In the initial state, the replacement position arm 8d, that is, the arm 8b disposed at the second replacement position P2 is empty.

The controller 60a executes the first process of indexing the specified arm 6b, that is, the arm 6b with the arm identification number N, at the first replacement position P1. In the case of FIG. 18, the specified arm 6b accommodates the tool T1. The controller 60a executes the first process of indexing the specified arm 6b at the first replacement position P1. Therefore, the replacement position arm 6c accommodates the tool T1.

Next, the controller 60a executes a second process of conveying the tool from the replacement position arm 6c to the replacement position arm 8d using the tool conveying device 9. In the case of FIG. 18, the tool T1 is conveyed from the replacement position arm 6c to the replacement position arm 8d.

Next, the controller 60a executes a third process of indexing a specified arm 8b, that is, an arm 8b with the arm identification number M, at the second replacement position P2. In the case of FIG. 18, the specified arm 8b accommodates the tool T2. Therefore, the replacement position arm 8d accommodates the tool T2.

Next, the controller 60a executes a fourth process of conveying the tool from the replacement position arm 8d to the replacement position arm 6c using the tool conveying device 9. In the case of FIG. 18, the tool T2 is conveyed from the replacement position arm 8d to the replacement position arm 6c.

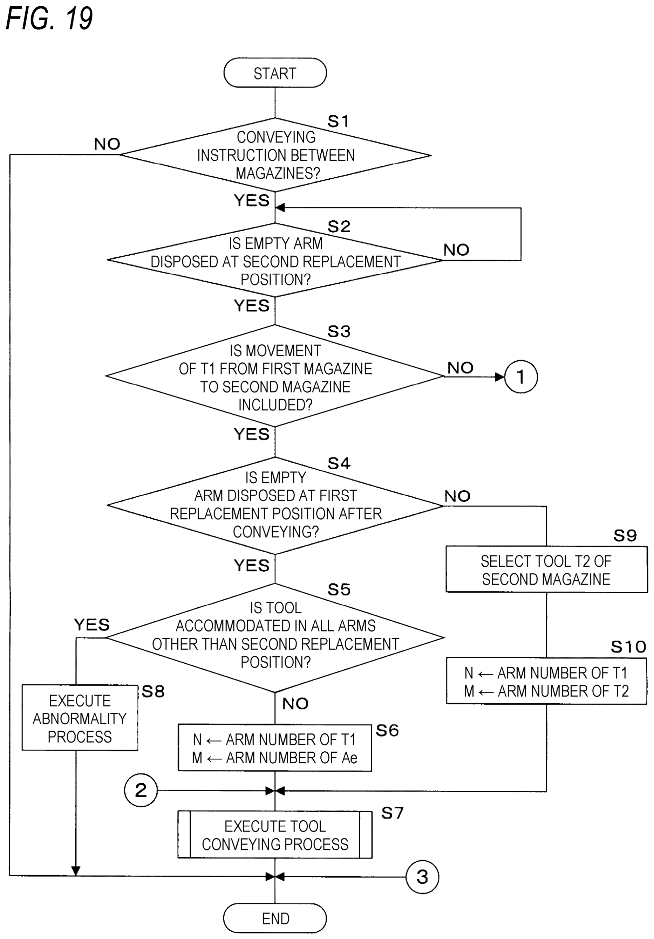

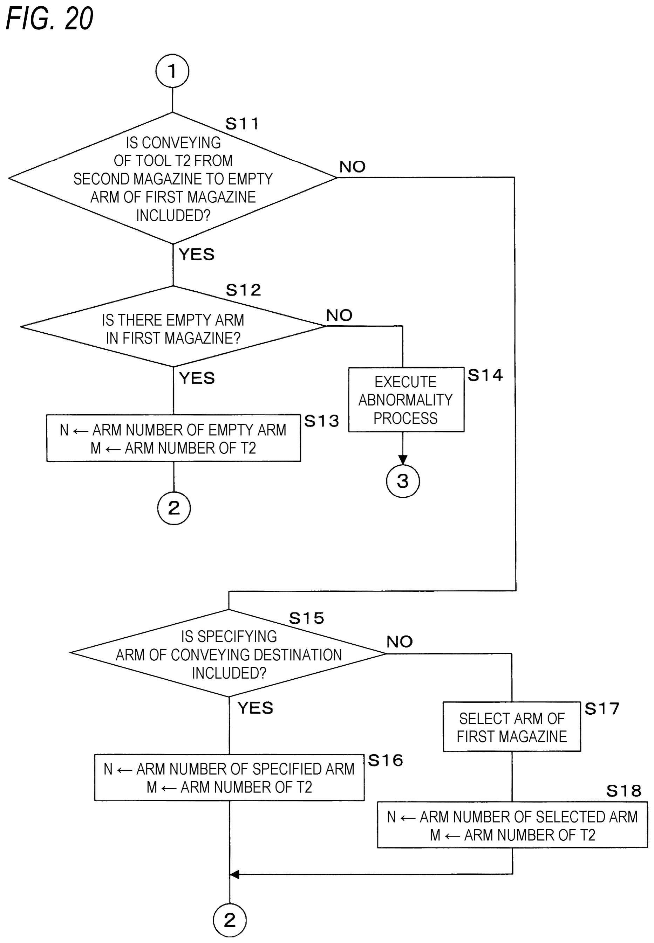

FIGS. 19 and 20 are flowcharts illustrating arm specifying processes of specifying the arms 6b and 8b to be indexed to the first replacement position P1 and the second replacement position P2 by the controller 60a. The controller 60a determines whether an instruction to execute a conveying instruction for conveying a tool between the first magazine 6 and the second magazine 8 is read (S1). When it is determined not to execute the conveying instruction (NO in S1), the controller 60a ends the process.

When it is determined to execute the conveying instruction (YES in S1), the controller 60a determines whether the empty arm 8b is disposed at the second replacement position P2 (S2). For example, the controller 60a causes the notification unit 64 to display a message prompting the operator to confirm whether the empty arm 8b is disposed at the second replacement position P2. In addition, the controller 60a causes the notification unit 64 to display a message prompting the operator to input that the operator has confirmed that the empty arm 8b is disposed at the second replacement position P2. Since the operator may forget to input the tool identification number, the operator is prompted to confirm that the empty arm 8b is disposed at the second replacement position P2. In a case where information indicating that the operator has confirmed that the empty arm 8b is disposed at the second replacement position P2 is input from the operation unit 66, the controller 60a determines that the empty arm 8b is disposed at the second replacement position P2.

When it is determined that the empty arm 8b is not disposed at the second replacement position P2 (NO in S2), the controller 60a returns the process to step S2. When it is determined that the empty arm 8b is disposed at the second replacement position P2 (YES in S2), the controller 60a determines whether the conveying instruction includes conveying of the tool T1 from the first magazine 6 to the second magazine 8 (S3). When it is determined that the conveying instruction includes the conveying of the tool T1 from the first magazine 6 to the second magazine 8 (YES in S3), the controller 60a determines whether the conveying instruction includes an instruction to dispose the empty arm 6b at the first replacement position P1 after the conveying of the tool T1 (S4).

When it is determined that the conveying instruction includes an instruction to dispose the empty arm 6b at the first replacement position P1 after the conveying of the tool T1 (YES in S4), the controller 60a determines whether tools are accommodated in all the arms 8b located at positions other than the second replacement position P2 (S5). When it is determined that the tools are accommodated in all the arms 8b located at the positions other than the second replacement position P2 (YES in S5), the controller 60a executes an abnormality process (S8) and ends the process. When it is determined that the tools are accommodated in all the arms 8b located at the positions other than the second replacement position P2, the empty arm 6b cannot be disposed at the first replacement position P1 after the conveying of the tool T1. Therefore, the controller 60a executes the abnormality process. The abnormality process includes, for example, a process of displaying that the conveying process cannot be performed, that the machine tool is stopped, and that a change in the control program is required, lighting or flashing light, or emitting a sound in the notification unit 64.

When it is determined that the tools are not accommodated in all the arms 8b located at the positions other than the second replacement position P2 (NO in S5), that is, when it is determined that any of the arms 8b disposed at the positions other than the second replacement position P2 is empty (hereinafter, the empty arm 8b is also referred to as an empty arm Ae), the controller 60a specifies the arm identification number of the arm 6b accommodating the tool T1 as the arm identification number N disposed at the first replacement position P1 in the first process, and specifies an arm identification number of the empty arm Ae as the arm identification number M disposed at the second replacement position P2 in the third process. (S6). That is, the controller 60a specifies the arm 6b to be disposed at the first replacement position P1 and specifies the arm 8b to be disposed at the second replacement position P2. The controller 60a stores the specified arm identification number N, that is, the specified arm 6b, in the auxiliary storage unit 60c. The controller 60a stores the specified arm identification number M, that is, the specified arm 8b, in the auxiliary storage unit 60c. The controller 60a executes a tool conveying process (S7). Details of the tool conveying process will be described later. The tool conveying process executed after step S6 is the tool conveying process illustrated in FIG. 14.

When it is determined in step S4 that the conveying instruction does not include the instruction for disposing the empty arm 6b at the first replacement position P1 after the conveying of the tool T1 (NO in S4), the controller 60a selects the tool T2 accommodated in the second magazine 8 (S9). The controller 60a selects, for example, the tool specified in the conveying instruction. The controller 60a specifies the arm identification number of the arm 6b accommodating the tool T1 as the arm identification number N disposed at the first replacement position P1 in the first process, and specifies the arm identification number of the arm 8b accommodating the tool T2 as the arm identification number M disposed at the second replacement position P2 in the third process (S10). That is, the controller 60a specifies the arm 6b to be disposed at the first replacement position P1 and specifies the arm 8b to be disposed at the second replacement position P2. The controller 60a stores the specified arm identification number N, that is, the specified arm 6b, in the auxiliary storage unit 60c. The controller 60a stores the specified arm identification number M, that is, the specified arm 8b, in the auxiliary storage unit 60c. A tool conveying process is executed (S7). The tool conveying process executed after step S10 is the tool conveying process illustrated in FIG. 18.

When it is determined in step S3 that the conveying instruction does not include the conveying of the tool T1 from the first magazine 6 to the second magazine 8 (NO in S3), the controller 60a determines whether the conveying instruction includes a conveying instruction of the tool T2 from the second magazine 8 to the empty arm 6b of the first magazine 6 (S11). When it is determined that the conveying instruction includes the conveying instruction of the tool T2 from the second magazine 8 to the empty arm 6b of the first magazine 6 (YES in S11), the controller 60a determines whether there is an empty arm 6b in the first magazine 6 (S12).

When it is determined that there is no empty arm 6b in the first magazine 6 (NO in S12), the controller 60a executes an abnormality process (S14) and ends the process. The abnormality process of step S14 includes, for example, a process of displaying that the conveying process cannot be performed, that the machine tool is stopped, and that a change in the control program is required, lighting or flashing light, or emitting a sound in the notification unit 64.

When it is determined that there is an empty arm 6b in the first magazine 6 (YES in step S12), the controller 60a specifies an arm identification number of the empty arm 6b as the arm identification number N disposed at the first replacement position P1 in the first process, and specifies the arm identification number of the arm 8b accommodating the tool T2 as the arm identification number M disposed at the second replacement position P2 in the third process (step S13). That is, the controller 60a specifies the arm 6b to be disposed at the first replacement position P1 and specifies the arm 8b to be disposed at the second replacement position P2. The controller 60a stores the specified arm identification number N, that is, the specified arm 6b, in the auxiliary storage unit 60c. The controller 60a stores the specified arm identification number M, that is, the specified arm 8b, in the auxiliary storage unit 60c. The controller 60a executes a tool conveying process (S7). The tool conveying process executed after step S13 is the tool conveying process illustrated in FIG. 11.

When it is determined in step S11 that the conveying instruction does not include the conveying instruction of the tool T2 from the second magazine 8 to the empty arm 6b of the first magazine 6 (NO in S11), that is, when it is determined that the conveying instruction is the conveying instruction of the tool T2 from the second magazine 8 to the arm 6b accommodating the tool of the first magazine 6, the controller 60a determines whether the conveying instruction includes specifying the arm 6b of a conveying destination (S15).

When it is determined that the conveying instruction includes specifying the arm 6b of the conveying destination (YES in S15), the controller 60a specifies the arm identification number of the specified arm 6b as the arm identification number N disposed at the first replacement position P1 in the first process, and specifies the arm identification number of the arm 8b accommodating the tool T2 as the arm identification number M disposed at the second replacement position P2 in the third process (S16). That is, the controller 60a specifies the arm 6b to be disposed at the first replacement position P1 and specifies the arm 8b to be disposed at the second replacement position P2. The controller 60a stores the specified arm identification number N, that is, the specified arm 6b, in the auxiliary storage unit 60c. The controller 60a stores the specified arm identification number M, that is, the specified arm 8b, in the auxiliary storage unit 60c. The controller 60a executes a tool conveying process (S7). The tool conveying process executed after step S16 is the tool conveying process illustrated in FIG. 18.

When it is determined that the conveying instruction does not include specifying the arm 6b of the conveying destination (NO in S15), that is, when it is determined that the conveying instruction is an instruction for conveying the tool T2 to any of the arms 6b accommodating a tool, the controller 60a selects any of the arms 6b accommodating the tool in the first magazine 6 (S17), specifies the arm identification number of the selected arm 6b as the arm identification number N disposed at the first replacement position P1 in the first process, and specifies the arm identification number of the arm 8b accommodating the tool T2 as the arm identification number M disposed at the second replacement position P2 in the third process (S18). That is, the controller 60a specifies the arm 6b to be disposed at the first replacement position P1 and specifies the arm 8b to be disposed at the second replacement position P2. The controller 60a stores the specified arm identification number N, that is, the specified arm 6b, in the auxiliary storage unit 60c. The controller 60a stores the specified arm identification number M, that is, the specified arm 8b, in the auxiliary storage unit 60c. The controller 60a executes a tool conveying process (S7). The tool conveying process executed after step S18 is the tool conveying process illustrated in FIG. 18.

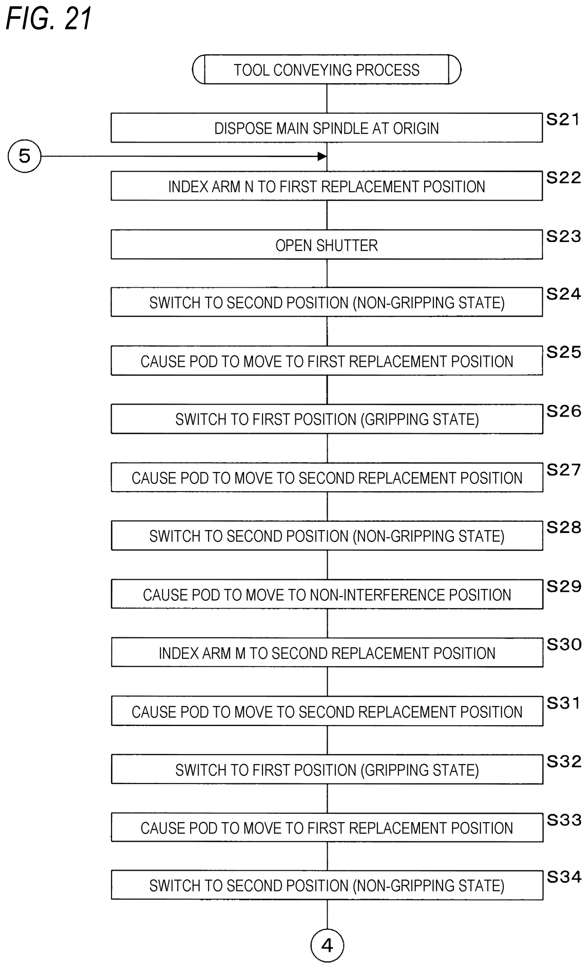

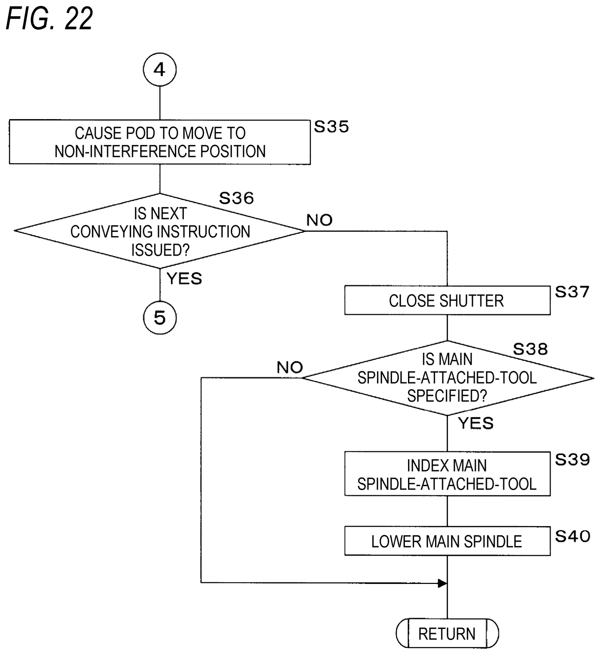

FIGS. 21 and 22 are flowcharts illustrating a tool conveying process. In the initial state, the pod 9f is located at the non-interference position P3. The controller 60a disposes the main spindle 10a at the origin (S21), and drives the motor 6f to index the arm 6b with the arm identification number N to the first replacement position P1 (S22). The controller 60a opens the shutter of the opening 52a (S23), switches the electromagnetic valve 63 to the second position (S24), that is, sets the two hands 96 to the non-gripping state, and causes the pod 9f to move to the first replacement position P1 (S25). The controller 60a switches the electromagnetic valve 63 to the first position (S26), that is, sets the two hands 96 to the gripping state. In a case where the replacement position arm 6c accommodates the tool, the pod 9f grips the tool.

The controller 60a causes the pod to move to the second replacement position P2 (S27) and switches the electromagnetic valve 63 to the second position (S28). That is, the pod 9f is in the non-gripping state. In a case where the pod 9f grips the tool, the tool is accommodated in the replacement position arm 8d. The controller 60a causes the pod 9f to move to the non-interference position P3 (S29).

The controller 60a drives the motor 8c to index the arm 8b with the arm identification number M to the second replacement position P2 (S30), and causes the pod 9f to move to the second replacement position P2 (S31). The controller 60a switches the electromagnetic valve 63 to the first position (S32), that is, sets the two hands 96 to the gripping state. In a case where the replacement position arm 8d accommodates the tool, the pod 9f grips the tool.

The controller 60a causes the pod 9f to move to the first replacement position P1 (S33), and switches the electromagnetic valve 63 to the second position (S34). That is, the pod 9f is in the non-gripping state. In a case where the pod 9f grips the tool, the tool is accommodated in the replacement position arm 6c. The controller 60a causes the pod to move to the non-interference position P3 (S35). The controller 60a determines whether a next conveying instruction is issued (S36). When it is determined that a next conveying instruction is issued (YES in S36), the controller 60a returns the process to step S22.

When it is determined that a next conveying instruction is not issued (NO in S36), the controller 60a closes the shutter (S37), and determines whether a tool to be attached to the main spindle 10a is specified (S38). When it is determined that the tool to be attached to the main spindle 10a is not specified (NO in S38), the controller 60a ends the tool conveying process and returns to the arm specifying process. When it is determined that the tool to be attached to the main spindle 10a is specified (YES in S38), the controller 60a indexes the arm 6b accommodating the tool to be attached to the main spindle 10a to a position at which the tool is attached to the main spindle 10a, that is, a lowermost position of the first magazine 6 (S39), lowers the main spindle 10a (S40), ends the tool conveying process, and returns to the arm specifying process.

The conveying of tool is also performed between the first magazine 6 and the second magazine 7. The conveying of the tool between the first magazine 6 and the second magazine 7 is performed in the same manner as the conveying of the tool between the first magazine 6 and the second magazine 8.

In the machine tool according to Embodiment 1, by executing the first process to the fourth process in a state in which the empty arm 8b is disposed at the second replacement position P2, the tool conveying device 9 conveys the tool to the empty arm 8b in a case where the tool is caused to move from the first magazine 6 to the second magazine 7 and 8, and conveys the tool to the empty arm 6b in a case where the tool is caused to move from the second magazine 7 and 8 to the first magazine 6. Therefore, the collision between the tools can be prevented without providing a detection unit that detects the presence or absence of the tool.

In the second process, the pod 9f performs the gripping operation at the first gripping position K1, moves to the second replacement position P2, and performs the non-gripping operation. In the fourth process, the pod 9f performs the gripping operation at the second gripping position K2, moves to the first replacement position P1, performs the non-gripping operation, and moves to the non-interference position P3. The tool can be conveyed while the collision between the tools is prevented without providing a detection unit that detects the presence or absence of the tool.

In a case where the tools are accommodated in all the arms 8b located at the positions other than the second replacement position P2, the replacement position arm 6c indexed in the first process cannot be made empty after the first moving instruction or the second moving instruction is executed. In Embodiment 1, in a case where the replacement position arm 6c indexed in the first process is made empty after the first moving instruction or the second moving instruction is executed, when it is determined that the tools are accommodated in all the arms 8b located at the positions other than the second replacement position P2, the abnormality process is executed. Accordingly, for example, it is possible to stop a conveying process not desired by the operator and notify the operator that the conveying process not desired by the operator is stopped.

In the first process, the specified arm 6b is indexed to the first replacement position P1, and in the third process, the specified arm 8b is indexed to the second replacement position P2.

In addition, by executing the first process to the fourth process in a state in which the empty arm 8b is disposed at the second replacement position P2, the tool conveying device 9 conveys the tool to the empty arm 8b in a case where the tool is caused to move from the first magazine 6 to the second magazine 7 and 8, and conveys the tool to the empty arm 6b in a case where the tool is caused to move from the second magazine 7 and 8 to the first magazine 6. The tool can be conveyed while the collision between the tools is prevented without providing a detection unit that detects the presence or absence of the tool.

In addition, due to the cover 52, the operator cannot attach and remove the tool to and from the arms of the second magazines 7 and 8. The tool conveying between the first magazine 6 and the second magazines 7 and 8 is possible only by the tool conveying device 9. Therefore, it is possible to prevent a tool to which a tool identification number is not input from being attached to the second magazines 7 and 8.

### (Embodiment 2)

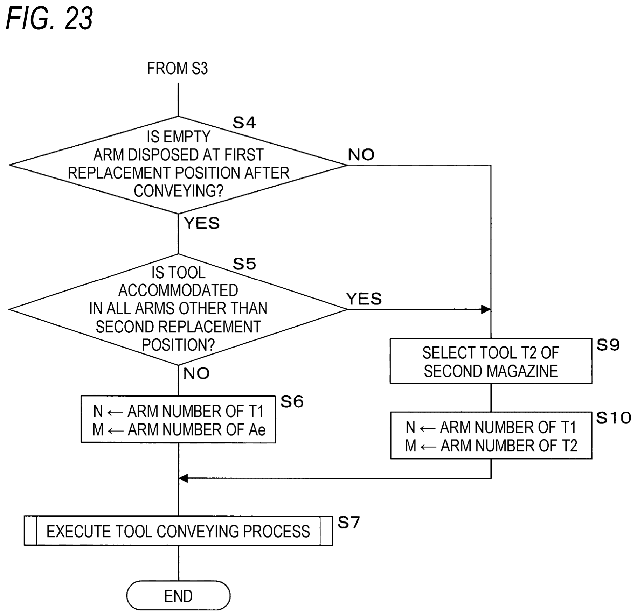

Hereinafter, the present invention will be described with reference to the drawings illustrating a machine tool according to Embodiment 2. FIG. 23 is a flowchart illustrating an arm specifying process of specifying the arms 6b and 8b to be indexed to the first replacement position P1 and the second replacement position P2 by the controller 60a. Embodiment 2 is the same as Embodiment 1 except that a process after the controller 60a determines YES in the determination process of step S5 in Embodiment 1 is different. Therefore, only the process after the controller 60a determines YES in the determination process of step S5 will be described below.

When it is determined that the tools are accommodated in all the arms 8b located at the positions other than the second replacement position P2 (YES in S5), the controller 60a selects the tool T2 accommodated in the second magazine 8 (S9). The controller 60a selects, for example, the tool accommodated in the replacement position arm 8d. The controller 60a may select the tool accommodated in the arm 8b of any second magazine 8, and the selected tool is not limited to the tool accommodated in the replacement position arm 8d.

The controller 60a specifies the arm identification number of the arm 6b accommodating the tool T1 as the arm identification number N disposed at the first replacement position P1 in the first process, and specifies the arm identification number of the arm 8b accommodating the tool T2 as the arm identification number M disposed at the second replacement position P2 in the third process (S10), and executes the tool conveying process (S7). The tool conveying process executed after step S10 is the tool conveying process illustrated in FIG. 18.

In a case where the tools are accommodated in all the arms 8b located at the positions other than the second replacement position P2, the arm 6b indexed in the first process cannot be made empty after the first moving instruction or the second moving instruction is executed. In the machine tool according to Embodiment 2, in a case where the arm 6b indexed in the first process is made empty after the first moving instruction or the second moving instruction is executed, when it is determined that the tools are accommodated in all the arms 8b located at the positions other than the second replacement position P2, in the execution of the fourth process, a process of conveying the tool from any arm 8b accommodating the tool to the arm 6b that is indexed in the first process and made empty in the second process is executed. The arm 6b indexed in the first process does not become empty. That is, the process is not a process desired by the operator. However, it is possible to continue the process of conveying the tool and proceed with the tool conveying process.

It should be understood that the embodiments disclosed herein are illustrative and non-restrictive in every respect. The scope of the present invention is intended to include all modifications within the scope of claims and the scope equivalent to the scope of claims. The matters described in the embodiments can be combined with each other. In addition, the independent claims and the dependent claims described in the scope of claims can be combined with each other in all combinations regardless of the citation form. Further, although a form (multi-claim form) that describes a claim that quotes two or more other claims is used in the scope of claims, the present invention is not limited thereto. The description may be made using a form that describes a multi-claim (multi-multi-claim) that quotes at least one multi-claim.

### Reference Signs List

6: first magazine
6b: arm (first accommodation portion)
8: second magazine
8b: arm (second accommodation portion)
9: tool conveying device
9f: pod (gripping portion)
9a: motor (moving mechanism)
9b: ball screw (moving mechanism)
9c: nut (moving mechanism)
9d: track (moving mechanism)
9e: slider (moving mechanism)
9g: connection portion (moving mechanism)
52: cover (restriction cover)
60: control device

## Claims

1. A control device configured to control: a first magazine including a plurality of first accommodation portions in which a first tool being accommodated; a second magazine including a plurality of second accommodation portions in which a second tool being accommodated; and a tool conveying device configured to convey at least one of the first tool and the second tool between a first replacement position for removing or accommodating the first tool in the first magazine and a second replacement position for removing or accommodating the second tool in the second magazine, wherein
in a state in which the second accommodation portion that is empty is disposed at the second replacement position, in a case where a first moving instruction for causing the first tool to move from the first magazine to the second magazine is executed and in a case where a second moving instruction for causing the second tool to move from the second magazine to the first magazine is executed, the control device is configured to:
execute a first process of indexing a specified first accommodation portion to the first replacement position in the first magazine;
execute a second process of performing a first tool conveying operation from the first replacement position to the second replacement position in the tool conveying device after the first process is executed;
execute a third process of indexing the second accommodation portion located at a position other than the second replacement position to the second replacement position in the second magazine after the second process is executed; and
execute a fourth process of performing a second tool conveying operation from the second replacement position to the first replacement position in the tool conveying device after the third process is executed.

2. The control device according to claim 1,
wherein the tool conveying device includes:
a gripping portion configured to grip at least one of the first tool and the second tool; and
a moving mechanism configured to move the gripping portion to:
a first gripping position corresponding to the first replacement position and where the gripping portion can grip at least one of the first tool and the second tool;
a second gripping position corresponding to the second replacement position and where the gripping portion can grip at least one of the first tool and the second tool; and
a non-interference position that is a position different from the first replacement position and the second replacement position and where the gripping portion does not interfere with the first magazine and the second magazine,
wherein in the second process, a moving operation of the gripping portion to the first gripping position, a gripping operation of the at least one of the first tool and the second tool by the gripping portion at the first gripping position, a moving operation of the gripping portion to the second gripping position, a non-gripping operation of the at least one of the first tool and the second tool by the gripping portion at the second gripping position, and a moving operation of the gripping portion from the second gripping position to the non-interference position are executed, and
wherein in the fourth process, a moving operation of the gripping portion to the second gripping position, a gripping operation of the at least one of the first tool and the second tool by the gripping portion at the second gripping position, a moving operation of the gripping portion to the first gripping position, a non-gripping operation of the at least one of the first tool and the second tool by the gripping portion at the first gripping position, and a moving operation of the gripping portion from the first gripping position to the non-interference position are executed.

3. The control device according to claim 1 or 2,
wherein before the first moving instruction or the second moving instruction is executed, the control device is configured to:
determine whether to make the first accommodation portion indexed in the first process empty after the first moving instruction or the second moving instruction is executed,
determine whether at least one of the first tool and the second tool are accommodated in all the second accommodation portions located at positions other than the second replacement position in a case where it is determined to make the first accommodation portion indexed in the first process empty after the first moving instruction or the second moving instruction is executed, and
execute an abnormality process in a case where it is determined that at least one of the first tool and the second tool are accommodated in all the second accommodation portions located at the positions other than the second replacement position.

4. The control device according to claim 1 or 2,
wherein before the first moving instruction or the second moving instruction is executed, the control device is configured to:
determine whether to make the first accommodation portion indexed in the first process empty after the first moving instruction or the second moving instruction is executed;
determine whether the first tool and/or the second tool are accommodated in all the second accommodation portions located at positions other than the second replacement position in a case where it is determined to make the first accommodation portion indexed in the first process empty after the first moving instruction or the second moving instruction is executed, and
execute, in a case where it is determined that the first tool and/or the second tool are accommodated in all the second accommodation portions located at the positions other than the second replacement position, a process of conveying at least one of the first tool and the second tool from any of the second accommodation portions in which at least one of the first tool and the second tool is accommodated to the first accommodation portion that is indexed in the first process and becomes empty in the second process in the execution of the fourth process when the first moving instruction or the second moving instruction is executed.

5. The control device according to claim 1 or 2,
wherein before the first process is executed, the control device is configured to execute a process of:
specifying the first accommodation portion to be disposed to the first replacement position;
storing first information indicating the specified first accommodation portion;
specifying the second accommodation portion to be disposed to the second replacement position; and
storing second information indicating the specified second accommodation portion, and
wherein in the first process, the first accommodation portion based on the first information is indexed to the first replacement position, and
wherein in the third process, the second accommodation portion based on the second information is indexed to the second replacement position.

6. A machine tool comprising:
a first magazine including a plurality of first accommodation portions in which a first tool being accommodated;
a second magazine including a plurality of second accommodation portions in which a second tool being accommodated;
a tool conveying device configured to convey at least one of the first tool and the second tool between a first replacement position for removing or accommodating the first tool in the first magazine and a second replacement position for removing or accommodating the second tool in the second magazine; and
a control device configured to control the first magazine, the second magazine, and the tool conveying device, wherein
the control device is configured to,
in a state in which the second accommodation portion that is empty is disposed at the second replacement position, in a case where a first moving instruction for causing the first tool to move from the first magazine to the second magazine is executed and in a case where a second moving instruction for causing the second tool to move from the second magazine to the first magazine is executed,
execute a first process of indexing a specified first accommodation portion to the first replacement position in the first magazine,
execute a second process of performing a first tool conveying operation from the first replacement position to the second replacement position in the tool conveying device after the first process is executed,
execute a third process of indexing the second accommodation portion located at a position other than the second replacement position to the second replacement position in the second magazine after the second process is executed, and
execute a fourth process of performing a second tool conveying operation from the second replacement position to the first replacement position in the tool conveying device after the third process is executed.

7. The machine tool according to claim 6, further comprising
a restriction cover configured to restrict attachment and removal of the second tool to and from the second magazine without using the tool conveying device.

8. A control method for controlling: a first magazine including a plurality of first accommodation portions in which a first tool being accommodated; a second magazine including a plurality of second accommodation portions in which a second tool being accommodated; and a tool conveying device configured to convey at least one of the first tool and the second tool between a first replacement position for removing or accommodating the first tool in the first magazine and a second replacement position for removing or accommodating the second tool in the second magazine, the control method comprising:
in a state in which the second accommodation portion that is empty is disposed at the second replacement position, in a case where a first moving instruction for causing the first tool to move from the first magazine to the second magazine is executed and in a case where a second moving instruction for causing the second tool to move from the second magazine to the first magazine is executed,
executing a first process of indexing a specified first accommodation portion to the first replacement position in the first magazine;
executing a second process of performing a first tool conveying operation from the first replacement position to the second replacement position in the tool conveying device after the first process is executed;
executing a third process of indexing the second accommodation portion located at a position other than the second replacement position to the second replacement position in the second magazine after the second process is executed; and
executing a fourth process of performing a second tool conveying operation from the second replacement position to the first replacement position in the tool conveying device after the third process is executed.

9. A computer program executable by a control device, the control device being configured to control: a first magazine including a plurality of first accommodation portions in which a first tool being accommodated; a second magazine including a plurality of second accommodation portions in which a second tool being accommodated; and a tool conveying device configured to convey at least one of the first tool and the second tool between a first replacement position for removing or accommodating the first tool in the first magazine and a second replacement position for removing or accommodating the second tool in the second magazine, wherein
the control device is caused to,
in a state in which the second accommodation portion that is empty is disposed at the second replacement position, in a case where a first moving instruction for causing the first tool to move from the first magazine to the second magazine is executed and in a case where a second moving instruction for causing the second tool to move from the second magazine to the first magazine is executed,
execute a first process of indexing a specified first accommodation portion to the first replacement position in the first magazine,
execute a second process of performing a first tool conveying operation from the first replacement position to the second replacement position in the tool conveying device after the first process is executed,
execute a third process of indexing the second accommodation portion located at a position other than the second replacement position to the second replacement position in the second magazine after the second process is executed, and
execute a fourth process of performing a second tool conveying operation from the second replacement position to the first replacement position in the tool conveying device after the third process is executed.
